(19)

Europäisches
Patentamt
European
Patent Office
Office européen
des brevets

(11) **EP 4 618 561 A1**

(12) **EUROPEAN PATENT APPLICATION**
published in accordance with Art. 153(4) EPC

(43) Date of publication:
**17.09.2025 Bulletin 2025/38**

(21) Application number: **23896720.2**

(22) Date of filing: **27.11.2023**

(51) International Patent Classification (IPC):
**H04N 21/44** (2011.01)

(52) Cooperative Patent Classification (CPC):
**H04N 21/431; H04N 21/44**

(86) International application number:
**PCT/CN2023/134290**

(87) International publication number:
**WO 2024/114569 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022 CN 202211519957**

(71) Applicant: **Huawei Technologies Co., Ltd.
Shenzhen, Guangdong 518129 (CN)**

(72) Inventors:
- **WANG, Yue
  Shenzhen, Guangdong 518129 (CN)**
- **ZHONG, Weicai
  Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **VIDEO PROCESSING METHOD, AND ELECTRONIC DEVICE**

(57) This application provides a video processing method and an electronic device. The method includes: obtaining a first video, where the first video includes a first video frame and a second video frame, the first video frame and the second video frame include at least one object, and the at least one object includes a first target object; responding to a first operation of selecting the first target object by a user and obtaining a second video, where the second video includes a third video frame and a fourth video frame, the third video frame and the fourth video frame include the first target object, the third video frame is obtained through cropping based on the first target object in the first video frame, and the fourth video frame is obtained through cropping based on the first target object in the second video frame; and playing the second video. In embodiments of this application, a first target object in an original video may be determined based on an operation of the user, and a new video is played. The new video is centered on the first target object, so that the first target object in the original video can be better highlighted, to improve user experience.

S1601: Obtain a first video, where the first video includes N video frames, the N video frames include a first video frame and a second video frame, the first video frame and the second video frame include at least one object, and the at least one object includes a first target object

S1602: Respond to a first operation of a user, where the first operation is an operation of selecting the first target object

S1603: Obtain a second video, where the second video includes a third video frame and a fourth video frame, and the third video frame and the fourth video frame include the first target object

S1604: Play the second video

FIG. 16

## Description

This application claims priority to Chinese Patent Application No. 202211519957.8, filed with the China National Intellectual Property Administration on November 30, 2022 and entitled "VIDEO PROCESSING METHOD AND ELECTRONIC DEVICE", which is incorporated herein by reference in its entirety.

## TECHNICAL FIELD

This application relates to the field of electronic devices, and more specifically, to a video processing method and an electronic device.

## BACKGROUND

With emergence of mobile Internet technologies, video watching has become a daily activity of a user. Currently, when a video application plays a video, functional singleness is present. For example, when the user needs to watch a target object in the video separately, the user needs to manually edit the video, and when the user switches the video from landscape-mode play to portrait-mode play, a problem like a loss of the target object in the video or an incomplete target object may be caused, resulting in deterioration of user experience.

## SUMMARY

This application provides a video processing method and an electronic device, so that a new video in which a target object in an original video is highlighted can be played based on an operation of a user, to improve user experience.

According to a first aspect, a video processing method is provided. The method includes: obtaining a first video, where the first video includes N video frames, N≥2 and N is an integer, the N video frames include a first video frame and a second video frame, the first video frame and the second video frame include at least one object, and the at least one object includes a first target object; responding to a first operation of a user, where the first operation is an operation of selecting the first target object; obtaining a second video, where the second video includes a third video frame and a fourth video frame, the third video frame and the fourth video frame include the first target object, the third video frame is obtained through cropping based on the first target object in the first video frame, and the fourth video frame is obtained through cropping based on the first target object in the second video frame; and playing the second video.

In this embodiment of this application, the electronic device may determine the first target object in the original video based on the operation of the user, and play the new video. The new video is centered on the first target object, so that the first target object in the original video can be better highlighted, to improve user experience.

With reference to the first aspect, in some implementations of the first aspect, the at least one object further includes a second target object, and the method further includes: obtaining a third video in response to a second operation of the user. The third video includes a fifth video frame and a sixth video frame, the fifth video frame includes the first target object and/or the second target object, and the sixth video frame includes the first target object and/or the second target object. The fifth video frame is obtained through cropping based on the first target object and/or the second target object in the first video frame, and the sixth video frame is obtained through cropping based on the first target object and/or the second target object in the second video frame.

With reference to the first aspect, in some implementations of the first aspect, the at least one object further includes the second target object, and the third video frame and the fourth video frame do not include the second target object.

With reference to the first aspect, in some implementations of the first aspect, a size of the first target object in the third video frame is different from a size of the first target object in the first video frame.

With reference to the first aspect, in some implementations of the first aspect, the size of the first target object in the third video frame is different from a size of the first target object in the fourth video frame.

With reference to the first aspect, in some implementations of the first aspect, the size of the first target object in the first video frame is the same as a size of the first target object in the second video frame, and an inter-frame speed of the first target object in the first video frame is different from an inter-frame speed of the first target object in the second video frame.

In this embodiment of this application, the electronic device may determine the target object in the original video, and generate the new video. The new video is centered on the target object, and a size of a cropping frame of the new video is different from a size of the original video. Therefore, a field of view changes, the target object in the original video can be better highlighted, to improve user experience.

With reference to the first aspect, in some implementations of the first aspect, the size of the first target object in the third video frame is the same as a size of the first target object in the fourth video frame.

With reference to the first aspect, in some implementations of the first aspect, the size of the first target object in the first video frame is different from the size of the first target object in the second video frame, and the inter-frame speed of the first target object in the first video frame is different from the inter-frame speed of the first target object in the second video frame.

In this embodiment of this application, the electronic device may determine the target object in the original video, and generate the new video. The new video is centered on the target object, and the size of the cropping frame of the new video is different from the size of the original video. Therefore, a field of view changes, the target object in the original video can be better highlighted, to improve user experience.

With reference to the first aspect, in some implementations of the first aspect, the method further includes displaying a first interface, where the first interface displays a first window and a second window, the first window displays the first video frame, and the second window displays the third video frame.

With reference to the first aspect, in some implementations of the first aspect, the method further includes playing the first video. The playing the second video includes: playing the second video in full screen when the first target object is detected. After the second video is played in full screen and the first target object is not detected, the method further includes: continuing to play the first video.

With reference to the first aspect, in some implementations of the first aspect, the method further includes: displaying a first interface, where the first interface includes a first window, and the first video is played in the first window. The playing a second video includes: displaying a second interface when the first target object is detected, where the second interface includes the first window and a second window, the first video is played in the first window, and the second video is played in the second window. After the displaying a second interface, the method further includes: displaying a third interface when the first target object is not detected, where the third interface includes a first window, the first video continues to be played in the first window, and the third interface does not include the second window.

With reference to the first aspect, in some implementations of the first aspect, before the responding to a first operation of a user, the method further includes: displaying the third interface, where the third interface includes a fifth window, and the third window includes the at least one object in the first video.

With reference to the first aspect, in some implementations of the first aspect, the first operation is an operation of selecting the first target object in the fifth window.

With reference to the first aspect, in some implementations of the first aspect, the N video frames include the first target object, the second video includes M video frames, and the M video frames include the first target object, where M≤N, and M is an integer.

With reference to the first aspect, in some implementations of the first aspect, the method further includes: determining a frame extraction interval based on an inter-frame speed of the first target object between two adjacent video frames in the N video frames.

With reference to the first aspect, in some implementations of the first aspect, the first video is a landscape video, the second video is a portrait video, the first video frame and the second video frame are landscape video frames, and the third video frame and the fourth video frame are portrait video frames.

With reference to the first aspect, in some implementations of the first aspect, duration of the first video is different from duration of the second video.

With reference to the first aspect, in some implementations of the first aspect, a height of the third video frame is different from a height of the fourth video frame.

According to a second aspect, an embodiment of this application provides an electronic device. The electronic device includes modules/units that perform the method according to any one of the foregoing aspects or the possible designs of the foregoing aspects. The modules/units may be implemented by hardware, or may be implemented by hardware executing corresponding software.

According to a third aspect, an embodiment of this application provides a chip. The chip is coupled to a memory in an electronic device, and is configured to: invoke a computer program stored in the memory and perform the technical solutions according to any one of the foregoing aspects and the possible designs of the foregoing aspects in embodiments of this application. In this embodiment of this application, "coupling" means that two components are directly or indirectly combined with each other.

According to a fourth aspect, an embodiment of this application provides a computer-readable storage medium. The computer-readable storage medium includes a computer program. When the computer program is run on an electronic device, the electronic device is enabled to perform the technical solution according to any one of the foregoing aspects and the possible designs of the foregoing aspects.

According to a fifth aspect, an embodiment of this application provides a computer program. The computer program includes instructions. When the instructions are run on a computer, the computer is enabled to perform the technical solution according to any one of the foregoing aspects and the possible designs of the foregoing aspects.

According to a sixth aspect, an embodiment of this application provides a graphical user interface on an electronic device. The electronic device includes a display, one or more memories, and one or more processors. The one or more processors are configured to execute one or more computer programs stored in the one or more memories, and the graphical user interface includes a graphical user interface displayed when the electronic device performs the technical solution in any one of the foregoing aspects and the possible designs of the foregoing aspects.

According to a seventh aspect, an embodiment of this application provides an electronic device. The electronic device includes one or more processors and one or more memories. The one or more memories store one or more computer programs, the one or more computer programs include instructions, and when the instructions are executed by the one or more processors, any one of the foregoing aspects or the possible implementations of the foregoing aspects is performed.

For beneficial effect of the second aspect to the seventh aspect, refer to beneficial effect of the first aspect. Details are not described again.

## BRIEF DESCRIPTION OF DRAWINGS

FIG. 1 is a diagram of a structure of an electronic device according to an embodiment of this application;

FIG. 2 shows an example of a block diagram of a software structure of an electronic device according to an embodiment of this application;

FIG. 3 shows a group of GUIs according to an embodiment of this application;

FIG. 4 shows a group of GUIs according to an embodiment of this application;

FIG. 5 shows a group of GUIs according to an embodiment of this application;

FIG. 6 shows a group of GUIs according to an embodiment of this application;

FIG. 7 is a diagram of video frame cropping according to an embodiment of this application;

FIG. 8 is a diagram of video frame cropping according to an embodiment of this application;

FIG. 9 is a diagram of video frame cropping according to an embodiment of this application;

FIG. 10 is a schematic flowchart of a video processing method according to an embodiment of this application;

FIG. 11 is a diagram of determining an inter-frame speed according to an embodiment of this application;

FIG. 12 is a diagram of comparison between an aspect ratio of an original video frame and an aspect ratio of a cropped video frame according to an embodiment of this application;

FIG. 13 is a diagram of determining a cropping frame according to an embodiment of this application;

FIG. 14 is a schematic flowchart of a video processing method according to an embodiment of this application;

FIG. 15 is a diagram of determining a cropping frame according to an embodiment of this application;

FIG. 16 is a schematic flowchart of a video processing method according to an embodiment of this application;

FIG. 17 is a diagram of composition of an electronic device according to an embodiment of this application; and

FIG. 18 is a diagram of composition of a server according to an embodiment of this application.

## DESCRIPTION OF EMBODIMENTS

Terms used in following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

The following describes an electronic device, a user interface used for the electronic device, and embodiments used for using the electronic device. In some embodiments, the electronic device may be a portable electronic device that further includes another function like a personal digital assistant function and/or a music player function, for example, a mobile phone, a tablet computer, or a wearable electronic device (for example, a smartwatch) having a wireless communication function. An example embodiment of a portable electronic device includes but is not limited to a portable electronic device using iOS®, Android®, Microsoft®, or another operating system. The portable electronic device may alternatively be another portable electronic device, like a laptop (Laptop). It should be further understood that, in some other embodiments, the electronic device may not be the portable electronic device but a desktop computer.

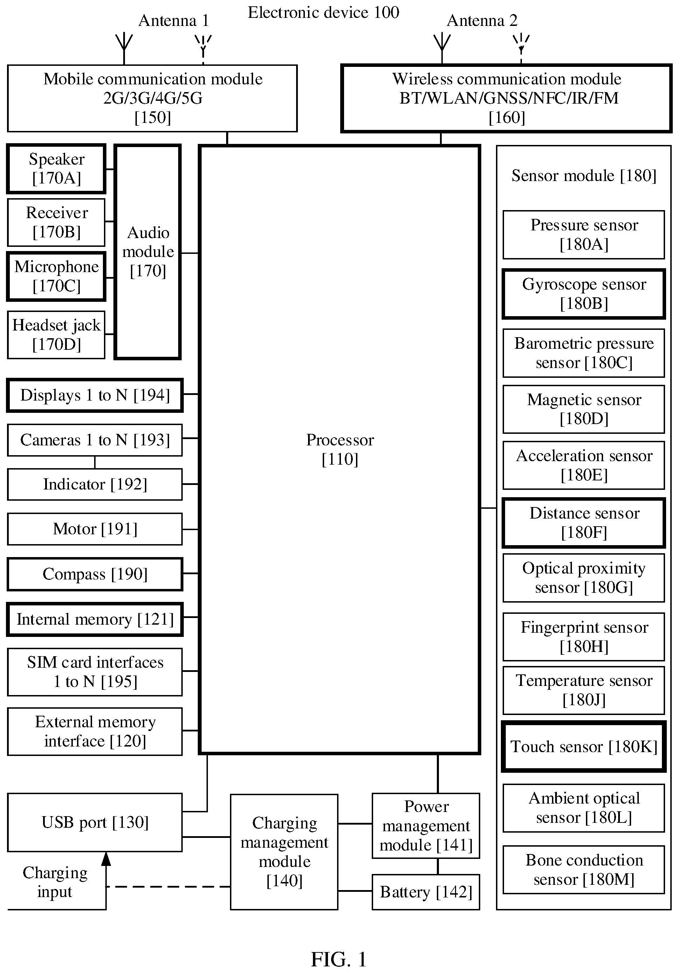

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 100 may alternatively include one or more processors 110. The controller may generate an operation control signal based on instruction operation code and a time sequence signal, to complete control of instruction fetching and instruction execution. In some other embodiments, a memory may further be disposed in the processor 110, to store instructions and data. For example, the memory in the processor 110 may be a cache. The memory may store instructions or data just used or cyclically used by the processor 110. If the processor 110 needs to use the instructions or data again, the instructions or data may be directly invoked from the memory. This avoids repeated access and reduces waiting time of the processor 110, and improves data processing or instruction execution efficiency of the electronic device 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device. The USB interface 130 may alternatively be configured to be connected to a headset, and play audio through the headset.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or more displays 194.

In some embodiments of this application, the display 194 in FIG. 1 is foldable when the display panel is made of a material like an OLED, an AMOLED, or an FLED. Herein, that the display 194 may be bent means that the display may be bent to any angle at any part, and may be held at the angle. For example, the display 194 may be folded left and right from the middle. Alternatively, the display 194 may be folded up and down from the middle.

The display 194 of the electronic device 100 may be a flexible screen. Currently, the flexible screen attracts much attention due to unique features and huge potential of the flexible screen. Compared with a conventional display, the flexible display has features of strong flexibility and bendability, and can provide a user with a new bendability-based interaction mode, to satisfy more requirements of the user on an electronic device. For an electronic device configured with a foldable display, the foldable display of the electronic device may be switched between a small screen in a folded form and a large screen in an unfolded form at any time. Therefore, the user uses a split-screen function more frequently on the electronic device provided with the foldable display.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and a skin color of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, MPEG-4, and the like.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100, such as image recognition, facial recognition, speech recognition, and text understanding, can be implemented by using the NPU.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store one or more computer programs. The one or more computer programs include instructions. The processor 110 may run the instructions stored in the internal memory 121, so that the electronic device 100 performs the method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 100, and the like. In addition, the internal memory 121 may include a high-speed random access memory, or may include a nonvolatile memory, for example, one or more magnetic disk storage devices, a flash memory, or a universal flash storage (universal flash storage, UFS). In some embodiments, the processor 110 may run the instructions stored in the internal memory 121 and/or the instructions stored in the memory that is disposed in the processor 110, to enable the electronic device 100 to perform the method provided in embodiments of this application, other applications, and data processing. The electronic device 100 may implement audio functions, for example, a music playing function and a recording function, by using the audio module 170, the speaker 170A, the receiver 170B, the microphone 170C, the headset jack 170D, the application processor, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the electronic device 100. In some embodiments, an angular velocity of the electronic device 100 around three axes (that is, axes X, Y, and Z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The acceleration sensor 180E may detect accelerations of the electronic device 100 in various directions (usually on three axes). When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

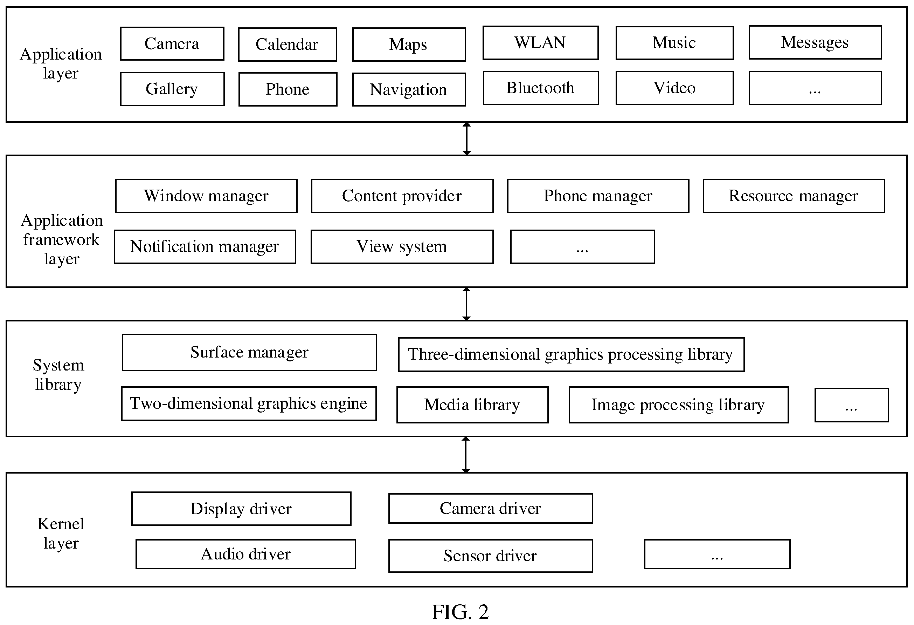

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and a system library, and a kernel layer. The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer, and the application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, and determine whether there is a status bar, a lock screen, a screen capture, or the like.

The content provider is configured to: store and obtain data, and enable the data to be accessed by an application. The data may include a video, an image, audio, dialed and answered calls, a browsing history and bookmarks, an address book, and the like.

The view system includes visual controls such as a control for displaying text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources for an application, such as a localized character string, an icon, an image, a layout file, and a video file.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or an indicator light flashes.

The system library may include a plurality of functional modules, for example, a surface manager (surface manager), a media library (media library), a three-dimensional graphics processing library (for example, OpenGL ES), and 2D graphics engine (for example, SGL).

The surface manager is configured to manage a display subsystem and provide fusion of 2D and 3D layers for a plurality of applications.

The media library supports playback and recording in a plurality of frequently used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

With emergence of mobile Internet technologies, video watching has become a daily activity of a user. Currently, when a video application plays a video, functional singleness is present. For example, when the user needs to watch a target object in the video separately, the user needs to manually edit the video, and when the user switches the video from landscape-mode play to portrait-mode play, a problem like a loss of the target object in the video or an incomplete target object may be caused, resulting in deterioration of user experience. In view of this, this application provides a video processing method, to lock the target object in the original video and to adjust, based on the target object, a size of a cropping frame during video editing, so that a new video in which the target object in the original video is highlighted can be output, to improve user experience.

Generally, when watching a video, the user mainly focuses on a target object of the video. The target object of the video may be understood as main content presented in the video, and the target object of the video may be a person, an animal, an object, an action, or the like in the video. For example, when the video is a football match video, a target object of the football match video may be a football, a player dribbling the ball, a star player, a dribbling action of a player, a foul action of a player, or the like.

To help the user better watch the target object in the video, an electronic device may determine the target object in the video based on an operation of the user, and generate a new video.

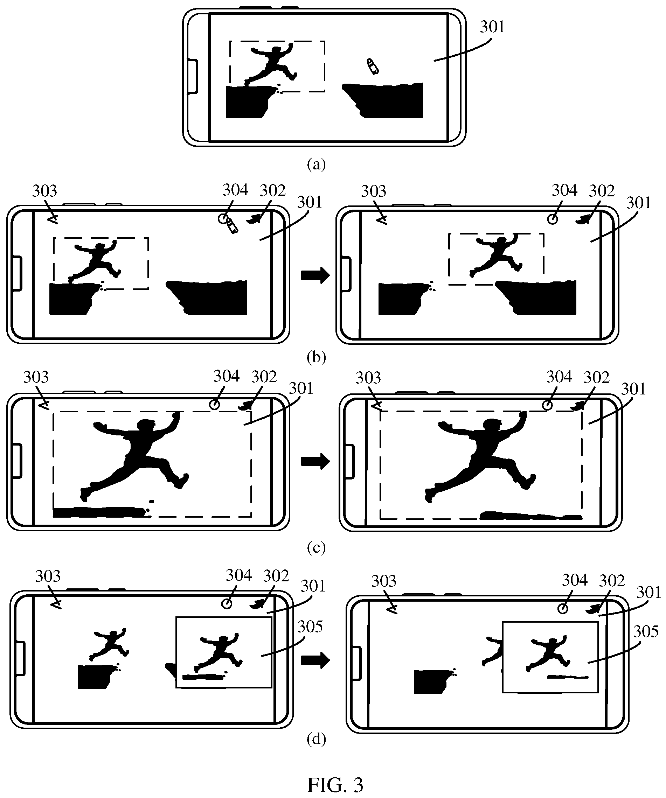

FIG. 3 shows a group of graphical user interfaces (graphical user interfaces, GUIs) according to an embodiment of this application.

As shown in (a) in FIG. 3, an electronic device displays an interface 301. The interface 301 is a playing interface of a video application. The electronic device may play a video #1 in the interface 301. Content of the video #1 is that a person jumps from a location #1 to a location #2. A bold solid line in the interface 301 is a boundary of the video #1, and the electronic device may display other information outside the boundary, for example, information like time and signal strength. The electronic device detects an operation of tapping the interface 301 by a user, and may display, in response to the operation, GUIs shown in (b) in FIG. 3.

The electronic device may display one or more controls in the interface 301 in response to the operation of tapping the interface 301 by the user. The one or more controls may correspond to different functions. For example, a control 302 corresponds to a sharing function, a control 303 corresponds to an exit function, and a control 304 corresponds to a function of generating a target object video. The function of generating a target object video may be understood as that the electronic device selects an object in an original video as a target object, and generates a new video based on the target object. When the electronic device detects an operation of tapping the control 304 by the user, in response to the operation, the electronic device may crop the video #1 by using a dashed box in (b) in FIG. 3 as a cropping frame, to display GUIs shown in (c) in FIG. 3.

As shown in (c) in FIG. 3, in response to detecting the operation of tapping the control 304 by the user, the electronic device may crop the video #1 by using the dashed box in (b) in FIG. 3 as the cropping frame. A jumping action of the person in the video #1 is selected as the target object in the cropping frame, and a cropped video frame is increased to a size the same as a size of the video #1, to generate a video #2 and play the video #2 in the interface 301. Content of the video #2 is centered on the jumping action of the person, and the jumping action of the person can be highlighted. It can be learned by comparing (b) and (c) in FIG. 3 that, the person in the video #1 shown in (b) in FIG. 3 jumps from a left side of a display to a right side of the display, and the person in the video #2 shown in (c) in FIG. 3 is in a middle location of the display. In addition, because the jumping action of the person is highlighted in the video #2, a size of the person in the video #2 is greater than a size of the person in the video #1.

In some other examples, as shown in (d) in FIG. 3, in response to detecting the operation of tapping the control 304 by the user, the electronic device may select the jumping action of the person in the video #1 as the target object to generate the video #2, and display an interface 305 in the interface 302. The video #2 is previewed and played in the interface 305. When detecting an operation of tapping the interface 305 by the user, the electronic device may play the video #2 in full screen in response to the operation.

It should be noted that a method for determining a target object in a video and generating a new video by an electronic device in this embodiment of this application is described in detail below.

In this embodiment of this application, the electronic device may automatically generate a new video based on an original video, and the new video retains main content of the original video, so that the user can conveniently watch main content presented in the video, to improve user experience.

In the example shown in FIG. 3, the electronic device may automatically identify an action of a person in a video as a target object, to generate a new video. In some other examples, the electronic device may further determine a target object based on selection of the user, and generate a new video.

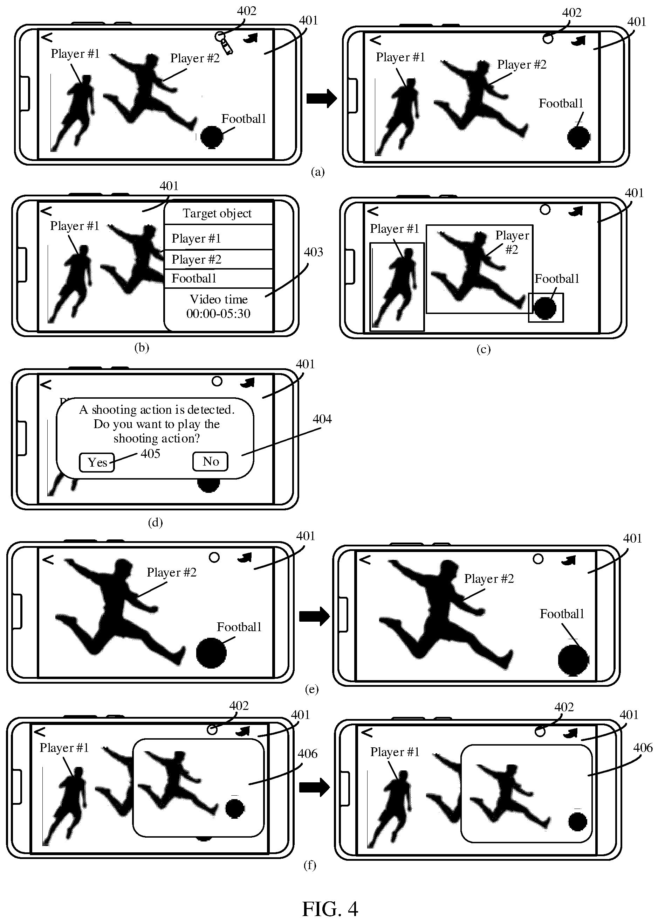

FIG. 4 shows another group of GUIs according to an embodiment of this application.

As shown in (a) and (b) in FIG. 4, the electronic device displays an interface 401. The interface 401 is a playing interface of a video application. The electronic device may play a video #1 in the interface 401. The video #1 is a football match video. Objects in the video #1 include a player #1, a player #2, and a football. The electronic device may further display a control 402 in the interface 401, and the control 402 corresponds to a function of generating a target object video. The electronic device detects an operation of tapping the control 402 by a user, and may identify, in response to the operation, the objects in the video and display an interface 403. The interface 403 includes information about the objects in the video #1. When detecting an operation of selecting an object by the user in the interface 403, the electronic device may display, in response to the operation, GUIs shown in (e) or (f) in FIG. 4. In this example, an object selected by the user may be referred to as a target object.

Optionally, in some examples, the user may further set duration of a generated new video in the interface 403. For example, as shown in (b) in FIG. 4, the user sets 00:00 to 5:30 as video time. When generating the new video, the electronic device may determine the target object from video content in a time period from 00:00 to 05:30 of the video #1, and generate the new video. The duration of the generated new video is 5:30.

In some other examples, as shown in (a) and (c) in FIG. 4, the electronic device detects the operation of tapping the control 402 by the user, and the electronic device may select, in response to the operation, an identified object in the interface 401. When detecting an operation of selecting an object (for example, tapping the player #2 and the football) by the user in the interface 401, the electronic device may display, in response to the operation, GUIs shown in (e) or (f) in FIG. 4. In this example, the object selected by the user may be referred to as a target object.

In some other examples, the electronic device may automatically identify a target object in the video. For example, the detected target object is a shot. When detecting a shot of the player #2 in the video #1, the electronic device may display GUIs shown in (d) or (e) in FIG. 4.

It should be noted that the electronic device may detect the target object in the video #1 in a process of playing the video #1 according to a preset rule. The preset rule may be set by a system, or may be set by the user. For example, the preset rule is that when a football video is played, a shot in the football video is automatically detected.

In some other examples, as shown in (d) in FIG. 4, when detecting a shot in the video #1, the electronic device may display an option box 404. The option box 404 includes prompt information used to prompt the user that a shooting action is detected. When the electronic device detects an operation of tapping the control 405 by the user, the electronic device may play, in the interface 401, a video #2 centering on the shot of the player #2, that is, the electronic device displays the GUIs shown in (e) or (f) in FIG. 4.

As shown in (e) in FIG. 4, in response to detecting an operation of selecting the football and the player #2 as the target objects by the user or automatically identifying the football and the player #2 as the target objects, the electronic device may select the football and the player #2 in the video #1 as the target objects to generate the video #2, and play the video #2 in the interface 401.

As shown in (f) in FIG. 4, in response to detecting the operation of selecting the football and the player #2 as the target objects by the user or automatically identifying the football and the player #2 as the target objects, the electronic device may select the football and the player #2 in the video #1 as the target objects to generate the video #2, and display an interface 406 in the interface 401. The video #2 is previewed and played in the interface 406. When detecting an operation of tapping the interface 406 by the user, the electronic device may play the video #2 in full screen in response to the operation.

In this embodiment of this application, the electronic device may determine the target object based on selection of the user or automatically identify the target object, and then automatically generate a new video based on the original video. The target object selected by the user or the automatically identified target object is highlighted in the new video, so that the user can watch main content presented in the video, to improve user experience.

It should be noted that, in the example shown above, the video played by the electronic device may be an online video of the video application, or may be a local video.

In the examples shown in FIG. 3 and FIG. 4, the electronic device determines the target object based on the selection of the user, or automatically detects the target object, and plays, based on the target object, the new video centered on the target object. In the foregoing examples, the electronic device plays the video in landscape mode. In some other examples, when the electronic device switches from landscape mode to portrait mode, the electronic device may also play the new video centered on the target object.

It should be noted that the new video centered on the target object in this embodiment of this application means that overall video content of the new video is centered on the target object. However, this does not mean that each video frame of the new video is centered on the target object. In some embodiments, when the electronic device or a server generates a new video, to ensure smoothness of a video picture, inter-frame smoothing may be performed on a cropping frame. Therefore, the target object in some video frames of the new video may have a slight offset relative to a central location of the video.

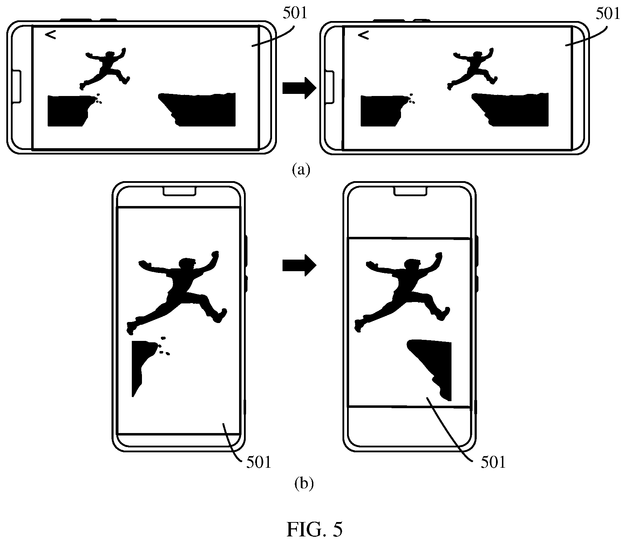

FIG. 5 shows a group of GUIs according to an embodiment of this application.

As shown in (a) in FIG. 5, an electronic device plays a video #1 in an interface 501 in landscape mode. When detecting that the electronic device switches from landscape mode to portrait mode, the electronic device may display GUIs shown in (b) in FIG. 5.

As shown in (b) in FIG. 5, the electronic device detects that the electronic device switches from landscape mode to portrait mode, may determine a target object in the video #1, and play a video #2 centered on the target object.

It can be learned that when the electronic device plays the video #2, a vertical length of a video frame may change, and a blank part may be filled with a black edge or a mask. For specific descriptions, refer to the following.

It should be understood that descriptions of the video in the example shown in FIG. 5 are similar to descriptions of FIG. 3. For brevity, details are not described herein again.

In this embodiment of this application, when the electronic device switches the video form landscape-mode play to portrait-mode play, the electronic device may determine a target object in an original video, and then automatically generate a new video based on the original video. The target object is highlighted in the new video, so that a user can easily watch main content presented in the video, to improve user experience.

In the examples shown in FIG. 3 to FIG. 5, the electronic device determines the target object based on selection of the user, or automatically detects the target object, and plays, based on the target object, the new video centered on the target object. In the foregoing examples, the electronic device may crop the original video based on a default parameter, but this is not limited thereto. In some other examples of this application, the electronic device may generate, based on user configuration, the new video centered on the target object.

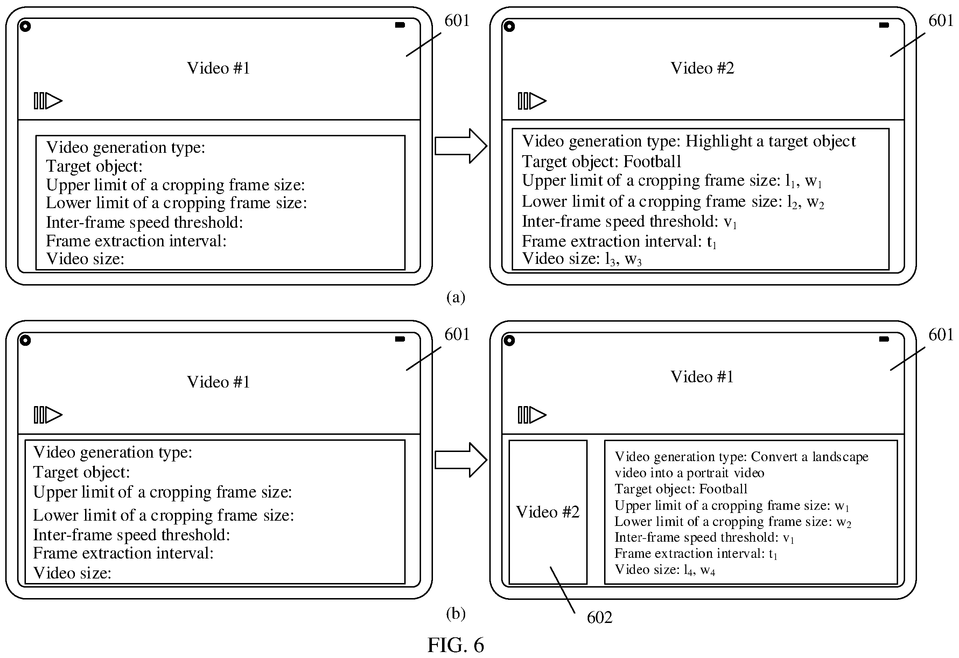

FIG. 6 shows another group of GUIs according to an embodiment of this application.

As shown in FIG. 6, an electronic device displays a window 601, and the electronic device may display a to-be-cropped video in the window 601. The to-be-cropped video may be uploaded by a user, or may be an online video.

The electronic device may generate, in response to a configuration operation of the user, a new video centered on a target object.

For example, the user may perform one or more of the following configuration operations.

   1. Video generation type. In this embodiment of this application, the video generation type may be classified into two types.

One video generation type is to generate, based on an original video, a video in which a target object is highlighted, that is, examples shown in FIG. 3 and FIG. 4. When playing the video #1, the electronic device may generate and play the video #2 based on the video #1, where the target object in the video #1 is highlighted in the video #2.

As shown in (a) in FIG. 6, in response to the video generation type of highlighting the target object selected by the user, the electronic device may generate a video #2 based on a video #1, and play the video #2 in the window 601.

The other video generation type is to generate, based on a landscape video, a portrait video in which a target object is highlighted, that is, an example shown in FIG. 5. The electronic device plays the video #1 in landscape mode. When detecting that the electronic device switches from landscape mode to portrait mode, the electronic device may generate and play the video #2 based on the video #1. The video #2 is suitable for portrait playing of the electronic device and the target object in the video #1 is highlighted.

As shown in (b) in FIG. 6, in response to the video generation type of converting the landscape video into the portrait video selected by the user, the electronic device may generate a video #2 based on a video #1 and play the video #2 in the window 602.

Optionally, the electronic device may still play the video #1 in the window 601.

2. Target object. The electronic device may identify objects in the video, so that the user may select an object in the video as the target object, or the electronic device identifies the target object in the video according to a preset rule. The target object may be a person, an animal, an object, an action, or the like in the video.

As shown in (a) and (b) in FIG. 6, it is assumed that the video #1 is a football match video. The electronic device may determine a football as the target object based on selection of the user, or determine a football as the target object according to the preset rule.

3. Cropping frame size limit. When generating the new video based on the original video, the electronic device needs to crop the original video. In this embodiment of this application, the cropping frame is determined based on the target object, and sizes of cropping frames for different video frames may be different. In this embodiment of this application, the user may define an upper limit and/or a lower limit of the size of the cropping frame, so that when the electronic device crops the original video, the size of the cropping frame is not less than the lower limit defined by the user, and is not greater than the upper limit defined by the user.

For example, as shown in (a) in FIG. 6, when the electronic device determines that the video generation type is highlighting the target object, the user may set the upper limit and/or the lower limit of the size of the cropping frame, where $l_1$ is an upper limit of a vertical length of the cropping frame, $w_1$ is an upper limit of a horizontal length of the cropping frame, $l_2$, is a lower limit of the vertical length of the cropping frame, and $w_2$ is a lower limit of the horizontal length of the cropping frame.

For example, as shown in (b) in FIG. 6, when the electronic device determines that the video generation type is converting the landscape video into the portrait video, the user may set the upper limit and/or the lower limit of the size of the cropping frame, where $w_1$ is the upper limit of the horizontal length of the cropping frame, and $w_2$ is the lower limit of the horizontal length of the cropping frame.

It can be learned that, when the electronic device determines that the video generation type is converting the landscape video into the portrait video, the user may set only the upper limit and/or the lower limit of the horizontal length of the cropping frame, and the vertical length of the cropping frame may be equal to a vertical length of a video frame of the original video.

The vertical length in this embodiment of this application may also be referred to as a height.

4. Inter-frame speed threshold of the target object. In this embodiment of this application, the size of the cropping frame may be determined based on the inter-frame speed threshold of the target object defined by the user. For specific descriptions, refer to the following.

In some examples, the inter-frame speed threshold of the target object may be a single speed value. For example, the inter-frame speed threshold of the target object is 70 pixels/s.

In some examples, the inter-frame speed threshold of the target object may be a speed range. For example, the inter-frame speed threshold of the target object is 70 pixels/s to 90 pixels/s.

5. Frame extraction interval. The frame extraction interval may be defined in this embodiment of this application, so that the electronic device may extract a video frame from the original video based on the frame extraction interval, and crop the extracted video frame to generate a new video.

6. Video size. The video size may be defined in this embodiment of this application, and the video size is a size of the generated video #2.

As shown in (a) in FIG. 6, when the electronic device determines that the video generation type is highlighting the target object, the generated video is a landscape video, and the user may set the video size. In this case, the video size is a landscape video size, where $l_3$ is a landscape length of the landscape video, and $w_3$ is a portrait length of the landscape video.

As shown in (b) in FIG. 6, when the electronic device determines that the video generation type is converting the landscape video into the portrait video, the generated video is a portrait video, and the user may set the video size. In this case, the video size is a portrait video size, where $l_4$ is a landscape length of the portrait video, and $w_4$ is a portrait length of the portrait video.

It should be noted that setting options shown in FIG. 6 may be further displayed in the interface 403 in FIG. 4.

In this embodiment of this application, the electronic device may generate a new video based on configuration of the user and the original video. The target object is highlighted in the new video, so that the user can watch main content presented in the video, to improve user experience.

It should be noted that an interface in the foregoing descriptions of the GUIs shown in FIG. 3 to FIG. 6 may also be understood as a window. For example, in the GUIs shown in FIG. 3, the interface 301 may also be referred to as a window 301, and the interface 305 may also be referred to as a window 305.

In the examples shown in FIG. 3 to FIG. 6, the electronic device may determine the target object in the video #1, crop a video frame of the video #1 based on the determined target object, and then generate the video #2 based on the cropped video frame. When cropping the video frame of the video #1, the electronic device may determine a size of a cropping frame of each video frame based on the target object. In other words, sizes of cropping frames of the video frames may be different. Because the sizes of the cropping frames of the video frames may be different, fields of view of cropped video frames may also be different. The field of view of the cropped video frame may be understood as a ratio relationship between a size of the cropped video frame and a size of an original video frame. For example, sizes of the video frame #1 and the video frame #2 are a, where a size of a cropping frame of the video frame #1 is b, a size of a cropping frame of the video frame #2 is c, and b>c. The video frame #1 is cropped to obtain a video frame #3, and the video frame #2 is cropped to obtain a video frame #4. Because b>c, and the sizes of the video frame #1 and the video frame #2 are both a, a ratio of the video frame #3 to the video frame #1 is greater than a ratio of the video frame #4 to the video frame #2, that is, a field of view of the video frame #3 is greater than a field of view of the video frame #4.

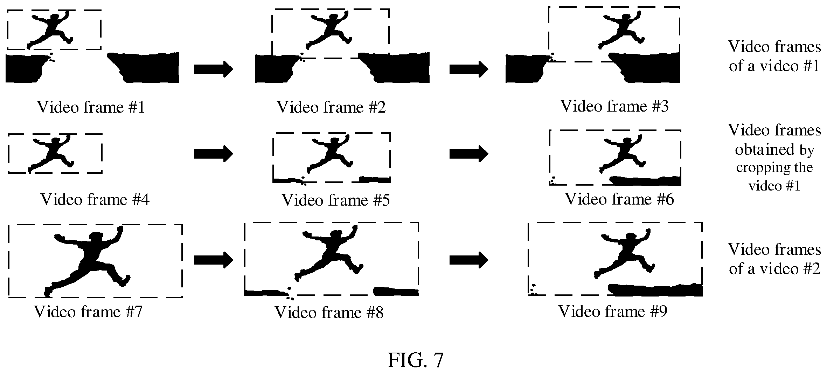

FIG. 7 is a diagram of video frame cropping according to an embodiment of this application.

As shown in FIG. 7, cropping of a video frame #1, a video frame #2, and a video frame #3 of a video #1 is used as an example. The video frame #1, the video frame #2, and the video frame #3 have a same size. The video frame #1 is before the video frame #2, and the video frame 2 is before the video frame #3. An electronic device determines a cropping frame #1 in the video frame #1, determines a cropping frame #2 in the video frame #2, and determines a cropping frame #3 in the video frame #3. It can be learned from FIG. 7 that a size of the cropping frame #1 is less than a size of the cropping frame #2, and the size of the cropping frame #2 is less than a size of the cropping frame #3. An aspect ratio of the foregoing cropping frame may be equal to an aspect ratio of the video frame. For determining the size of the cropping frame based on a target object, refer to the following description.

A video frame #4 may be obtained by cropping the video frame #1, a video frame #5 may be obtained by cropping the video frame #2, and a video frame #6 may be obtained by cropping the video frame #3. The size of the cropping frame #1 is less than the size of the cropping frame #2, and the size of the cropping frame #2 is less than the size of the cropping frame #3. Therefore, a size of the video frame #4 is less than a size of the video frame #5, and the size of the video frame #5 is less than a size of the video frame #6. That is, a field of view of the video frame #4 is less than a field of view of the video frame #5, and the field of view of the video frame #5 is less than a field of the video frame #6.

When a video #2 is generated, the size of the video frame #4 may be increased to a size the same as that of the video frame #1, to obtain a video frame #7; the size of the video frame #5 may be increased to a size the same as that of the video frame #2, to obtain a video frame #8; and the size of the video frame #6 is increased to a size the same as that of the video frame #3, to obtain a video frame #9.

It should be noted that, although sizes of the video frame #4, the video frame #5, and the video frame #6 are increased to a same size to obtain the video frame #7, the video frame #8, and the video frame #9 respectively, it may still be considered that a field of view of the video frame #7 is less than a field of view of the video frame #8, and the field of view of the video frame #8 is less than a field of view of the video frame #9.

It can be learned by comparing the video frame #1, the video frame #2, and the video frame #3 in the video #1 and the video frame #7, the video frame #8, and the video frame #9 in the video #2 that a size of a person in the video #1 does not change in the video. However, because sizes of the video frame #4, the video frame #5, and the video frame #6 are different, after the video frame #4, the video frame #5, and the video frame #6 are adjusted to a same size, a size of a person in the video frame changes. Therefore, the size of the person in the video #2 gradually decreases in the video.

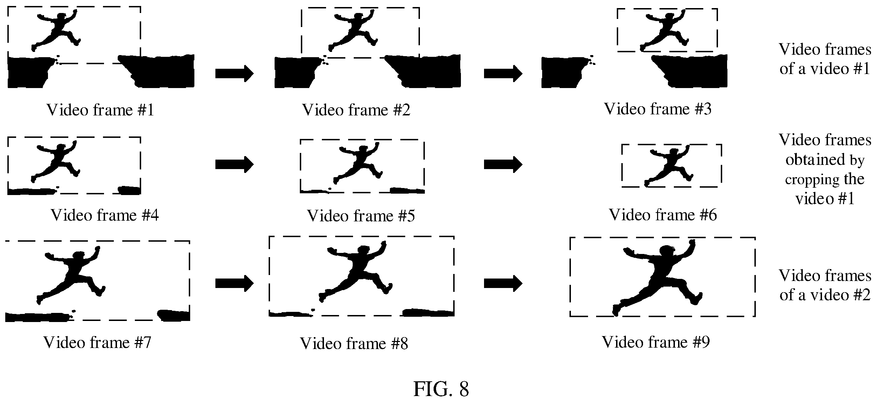

FIG. 8 is a diagram of video frame cropping according to an embodiment of this application.

As shown in FIG. 8, cropping of a video frame #1, a video frame #2, and a video frame #3 of a video #1 is used as an example. Sizes of the video frame #1, the video frame #2, and the video frame #3 are the same, the video frame #1 is before the video frame #2, and the video frame 2 is before the video frame #3. An electronic device determines a cropping frame #1 in the video frame #1, determines a cropping frame #2 in the video frame #2, and determines a cropping frame #3 in the video frame #3. It can be learned from FIG. 8 that a size of the cropping frame #1 is greater than a size of the cropping frame #2, and the size of the cropping frame #2 is greater than a size of the cropping frame #3. An aspect ratio of the cropping frame may be equal to an aspect ratio of the video frame.

A video frame #4 may be obtained by cropping the video frame #1, a video frame #5 may be obtained by cropping the video frame #2, and a video frame #6 may be obtained by cropping the video frame #3. The size of the cropping frame #1 is greater than the size of the cropping frame #2, and the size of the cropping frame #2 is greater than the size of the cropping frame #3. Therefore, a size of the video frame #4 is greater than a size of the video frame #5, and the size of the video frame #5 is greater than a size of the video frame #6. That is, a field of view of the video frame #4 is greater than a field of view of the video frame #5, and the field of the video frame #5 is greater than a field of view of the video frame #6.

When a video #2 is generated, the size of the video frame #4 may be increased to a size the same as that of the video frame #1, to obtain a video frame #7; the size of the video frame #5 may be increased to a size the same as that of the video frame #2, to obtain a video frame #8; and the size of the video frame #6 is increased to a size the same as that of the video frame #3, to obtain a video frame #9.

It can be learned by comparing the video frame #1, the video frame #2, and the video frame #3 in the video #1 and the video frame #7, the video frame #8, and the video frame #9 in the video #2 that a size of a person in the video #1 does not change in the video. However, because sizes of the video frame #4, the video frame #5, and the video frame #6 are different, after the video frame #4, the video frame #5, and the video frame #6 are adjusted to a same size, a size of a person in the video frame changes. Therefore, the size of the person in the video #2 gradually increases in the video.

It should be noted that, although sizes of the video frame #4, the video frame #5, and the video frame #6 are increased to a same size to obtain the video frame #7, the video frame #8, and the video frame #9 respectively, it may still be considered that a field of view of the video frame #7 is larger than a field of view of the video frame #8, and the field of view of the video frame #8 is larger than a field of view of the video frame #9.

In the examples of video frame cropping shown in FIG. 7 and FIG. 8, the cropping frame may gradually increase or decrease with the video frame. However, this embodiment of this application is not limited thereto. In some other examples, the cropping frame may gradually increase and then decrease with the video frame, or gradually decrease and then increase with the video frame.

In the examples of video frame cropping shown in FIG. 7 and FIG. 8, the video #1 is a landscape video, and the video #2 obtained through cropping is still a landscape video. However, this embodiment of this application is not limited thereto. In some other examples, the video #1 is a landscape video, and the video #2 obtained through cropping may be a portrait video.

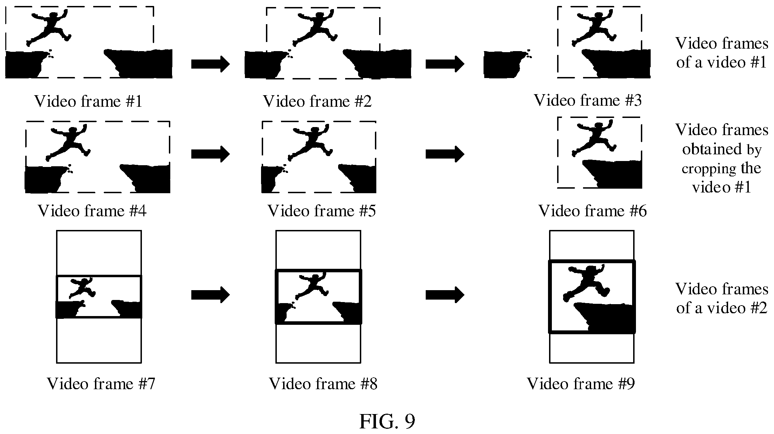

FIG. 9 is a diagram of video frame cropping according to an embodiment of this application.

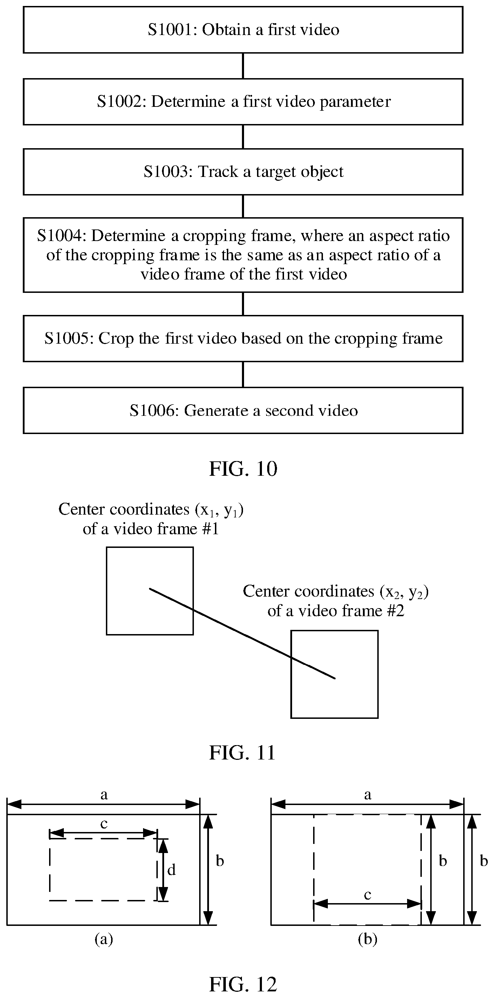

As shown in FIG. 9, cropping of a video frame #1, a video frame #2, and a video frame #3 of a video #1 is used as an example. The video frame #1, the video frame #2, and the video frame #3 have a same size, the video frame #1 is before the video frame #2, and the video frame 2 is before the video frame #3. An electronic device determines a cropping frame #1 in the video frame #1, determines a cropping frame #2 in the video frame #2, and determines a cropping frame #3 in the video frame #3. It can be learned from FIG. 11 that, vertical lengths of the cropping frames are the same, a horizontal length of the cropping frame #1 is greater than a horizontal length of the cropping frame #2, and the horizontal length of the cropping frame #2 is greater than a horizontal length of the cropping frame #3. Therefore, a size of the cropping frame #1 is greater than a size of the cropping frame #2, and the size of the cropping frame #2 is greater than a size of the cropping frame #3.

A video frame #4 may be obtained by cropping the video frame #1, a video frame #5 may be obtained by cropping the video frame #2, and a video frame #6 may be obtained by cropping the video frame #3. The size of the cropping frame #1 is greater than the size of the cropping frame #2, and the size of the cropping frame #2 is greater than the size of the cropping frame #3. Therefore, a size of the video frame #4 is greater than a size of the video frame #5, and the size of the video frame #5 is greater than a size of the video frame #6. That is, a field of view of the video frame #4 is greater than a field of view of the video frame #5, and the field of the video frame #5 is greater than a field of view of the video frame #6.

When a video #2 is generated, a difference from expansion of the sizes of the video frame #4, the video frame #6, and the video frame #7 to the same sizes as the video frame #1, the video frame #2, and the video frame #3 shown in FIG. 7 and FIG. 8 is that when a portrait video is generated, horizontal lengths of the video frame #4, the video frame #6, and the video frame #7 may be adjusted to a horizontal length of the portrait video. The horizontal length of the portrait video may be defined by a user, or may be determined based on a size of a screen of the electronic device.

Vertical lengths of the video frame #4, the video frame #5, and the video frame #6 are the same, but the horizontal length of the video frame #4 is greater than the horizontal length of the video frame #5, and the horizontal length of the video frame #5 is greater than the horizontal length of the video frame #6. Therefore, when the horizontal lengths of the video frame #4, the video frame #6, and the video frame #7 are adjusted to the horizontal length of the portrait video to obtain a video frame #7, a video frame #8, and a video frame #9 respectively, a vertical length of the video frame #7 is less than a vertical length of the video frame #8, and the vertical length of the video frame #8 is less than a vertical length of the video frame #9.

The foregoing describes the video processing method provided in embodiments of this application with reference to the GUIs and the diagrams of video cropping. The following describes a schematic flowchart of the video processing method provided in embodiments of this application with reference to FIG. 10.

FIG. 10 is a schematic flowchart of a video processing method according to an embodiment of this application. As shown in FIG. 10, the method includes the following steps.

S1001: Obtain a first video.

In some embodiments, when playing a video, an electronic device may obtain the first video. The first video may be an online video, or may be a local video, and the first video is a video played in landscape mode.

In some embodiments, a user may upload the first video to edit the first video, so that the electronic device may obtain the first video.

The first video includes N video frames, sizes of the N video frames may be the same, and N>1 and is an integer. The N video frames include M objects. The M objects may be people, animals, objects, actions, or the like.

When the M objects are people, animals, or objects, that the N video frames include the M objects may be understood as that the N video frames include the M people, animals, or objects.

When the M objects are actions, that the N video frames include the M objects may be understood as that content presented by the video including the N video frames is the M actions.

S1002: Determine a first video parameter.

In some embodiments, the electronic device determines the first video parameter in response to an operation of determining, by the user, to generate a video. The first video parameter may be preset. The first video parameter includes a target object and one or more of the following: a video generation type, a cropping frame size limit, an inter-frame speed threshold of the target object, a frame extraction interval, a video size, and video time.

For example, as shown in FIG. 3, the electronic device may determine the first video parameter in response to an operation of tapping the control 304 by the user, where the first video parameter is used to generate a video #2.

In some embodiments, the electronic device detects that the first video includes the preset target object, and determines the first video parameter. The first video parameter may be preset.

For example, as shown in FIG. 4, the electronic device detects that the video #1 includes a shooting action, and determines the first video parameter, where the first video parameter is used to generate the video #2.

In some embodiments, the electronic device detects an operation of configuring a video parameter by the user, and determines the first video parameter.

For example, as shown in (a) in FIG. 6, the user may set the video parameter in the interface 601. The video generation type configured by the user is highlighting the target object, so that the electronic device may determine the first video parameter in response to an operation of configuring the video parameter by the user.

S1003: Track the target object.

In some embodiments, after determining the first video parameter, the electronic device may track a target object of each video frame in the first video.

In some embodiments, after determining the first video parameter, the electronic device may send the first video parameter and the first video to a server, and the server tracks a target object of each video frame in the first video.

Optionally, in some embodiments, before S1003: tracking the target object, the method further includes: determining L video frames of the first video.

After determining the first video parameter, the electronic device or the server may determine the L video frames of the first video from the N video frames of the first video. The L video frames of the first video include the target object determined by the electronic device.

The electronic device or the server may determine the L video frames of the first video from the N video frames of the first video in the following two possible implementations.

In a possible implementation, the electronic device determines the L video frames of the first video from the N video frames of the first video based on the frame extraction interval, where N>L. The frame extraction interval may be configured by the user, or may be preset or automatically configured by a system.

It should be noted that, if the frame extraction interval is automatically configured by the system, when configuring the frame extraction interval, the system may determine the frame extraction interval based on an inter-frame speed. For example, the inter-frame speed is 70 pixels/s and the frame extraction interval is 2, that is, one video frame is extracted at intervals of two video frames; the inter-frame speed is 50 pixels/s and the frame extraction interval is 3; or the inter-frame speed is 90 pixels/s and the frame extraction interval is 1. In other words, the inter-frame speed is in inverse proportion to the frame extraction interval.

In a possible implementation, if the electronic device does not perform frame extraction, N=L.

S1004: Determine a cropping frame, where an aspect ratio of the cropping frame is the same as an aspect ratio of the first video.

In some embodiments, after determining the target object of each video frame, the electronic device may determine a cropping frame of each video frame.

In some embodiments, after determining the target object of each video frame, the server may determine a cropping frame of each video frame.

The electronic device or the server may determine the cropping frame of the video frame in the following several possible implementations.

In a possible implementation, the electronic device or the server determines the inter-frame speed of the target object, and determines a cropping frame of each video frame based on the inter-frame speed and the target object. The inter-frame speed of the target object may be understood as a ratio of displacement of the target object between two adjacent video frames to time. For example, as shown in FIG. 11, center coordinates of the target object in a video frame #1 are $(x_1, y_1)$, and center coordinates of the target object in a video frame #2 are $(x_2, y_2)$. The video frame #1 and the video frame #2 are adjacent video frames, and a time interval is t1. In this case, an inter-frame speed of the target object between the video frame #1 and the video frame #2 may be calculated according to a formula (1).

$$v = \frac{\sqrt{(x_1 - x_2)^2 + (y_1 - y_2)^2}}{t_1} \qquad (1)$$

The electronic device needs to determine a location and a size of the cropping frame when determining the cropping frame. The electronic device may determine the location of the cropping frame based on a location of the target object in the video frame, and may determine the size of the cropping frame based on the inter-frame speed of the target object.

For example, in the diagram of cropping shown in FIG. 8, L=3, the electronic device or the server determines three video frames, and a sequence of the three video frames is the video frame #1, the video frame #2, and the video frame #3. The electronic device or the server may identify a target object in the three video frames, and determine an inter-frame speed #1 of the target object between the video frame #1 and the video frame #2 and an inter-frame speed #2 of the target object between the video frame #2 and the video frame #3. When determining three cropping frames, the electronic device or the server may first determine the cropping frame #1 of the video frame #1. The electronic device or the server may determine a location of the cropping frame #1 based on a location of the target object in the video frame #1, and may extend outwards by a specific distance to determine the size of the cropping frame #1 while ensuring that the target object in the video frame #1 is complete. The distance extended outwards may be preset by the system, or may be set by the user. After determining the location and the size of the cropping frame #1, the electronic device or the server may determine a cropping frame #2. The electronic device or the server may determine a location of the cropping frame #2 based on a location of the target object in the video frame #2, and determine a size of the cropping frame #2 based on the size of the cropping frame #1 and the inter-frame speed #1. It is assumed that the inter-frame speed #1 is less than the threshold. The electronic device or the server may make the size of the cropping frame #2 less than the size of the cropping frame #1. After determining the location and the size of the cropping frame #2, the electronic device or the server may determine the cropping frame #3. The electronic device or the server may determine a location of the cropping frame #3 based on a location of the target object in the video frame #3, and determine a size of the cropping frame #3 based on the size of the cropping frame #2 and the inter-frame speed #2. It is assumed that the inter-frame speed #2 is less than the threshold. The electronic device or the server may make the size of the cropping frame #3 less than the size of the cropping frame #2, so that the electronic device or the server determines sizes of the three cropping frames. The size of the cropping frame #1 is greater than the size of the cropping frame #2, and the size of the cropping frame #2 is greater than the size of the cropping frame #3.

It should be noted that the threshold of the inter-frame speed may be a system threshold, or may be configured by the user, that is, in the GUI shown in FIG. 6, the user may configure the threshold of the inter-frame speed in the interface 601.

In a possible implementation, the electronic device or the server determines the cropping frame of the video frame according to a video understanding algorithm.

The electronic device or the server may identify higher-layer semantics of a first video frame according to the video understanding algorithm, and the electronic device or the server may determine a location and a size of a cropping frame of each video frame while ensuring that the higher-layer semantics remain unchanged.

It may be understood that, because a size of the target object in each video frame of the first video may change, to ensure that higher-layer semantics remain unchanged, sizes of cropping frames of all video frames determined by the electronic device or the server may be different.

The video understanding algorithm is not limited in this embodiment of this application. For example, the video understanding algorithm may be an improved dense trajectory feature (improved dense trajectories, idt) algorithm, or a slow feature analysis algorithm.

In some embodiments, if the cropping frame size limit is defined, the cropping frame size limit may include an upper limit and/or a lower limit, and when determining the size of the cropping frame, the electronic device or the server needs to make the size of the cropping frame greater than the lower limit and/or less than the upper limit. The cropping frame size limit may be preset by the system, or may be configured by the user, that is, in the GUIs shown in FIG. 6, the user may configure the cropping frame size limit in the interface 601.

For example, the cropping frame size limit may be an area limit of the cropping frame, and an area of the cropping frame needs to be greater than a lower limit and/or less than an upper limit.

For example, the cropping frame size limit may be a horizontal length limit and a vertical length limit of the cropping frame, and a horizontal length and a vertical length of the cropping frame need to be greater than a lower limit and/or less than an upper limit.

For example, the cropping frame size limit may be a circumference limit of the cropping frame, and a circumference of the cropping frame needs to be greater than a lower limit and/or less than an upper limit.

In some embodiments, the aspect ratio that is of the cropping frame and that is determined by the electronic device or the server is the same as the aspect ratio of the video frame of the first video.

For example, as shown in (a) in FIG. 12, the horizontal length of the video frame is a, the vertical length of the video frame is b, an aspect ratio of the video frame is a/b, the horizontal length of the cropping frame is c, the vertical length of the cropping frame is d, and an aspect ratio of the cropping frame is c/d, where a/b=c/d.

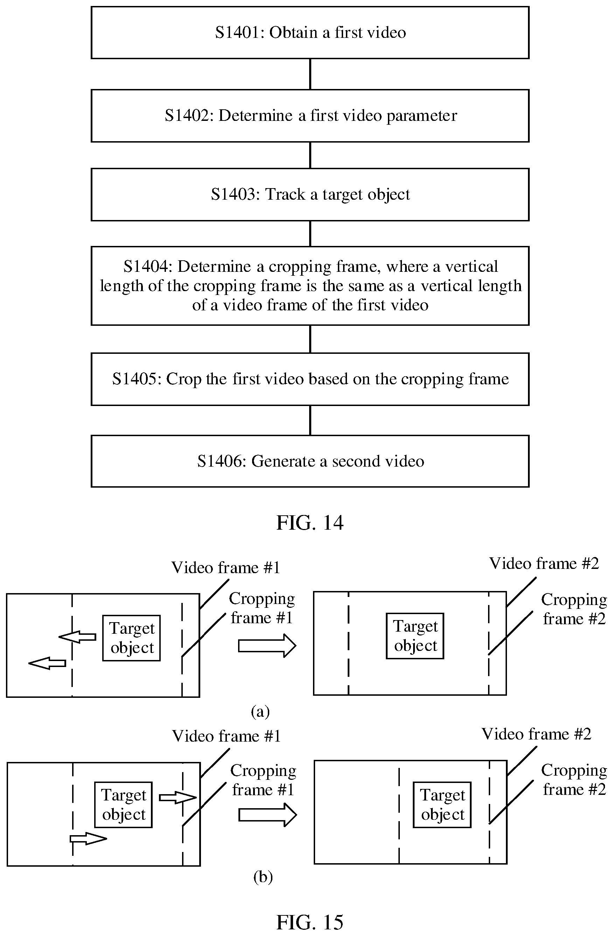

In some other embodiments, the vertical length that is of the cropping frame and that is determined by the electronic device or the server is the same as a vertical length of the video frame of the first video. For specific descriptions, refer to following descriptions for FIG. 14.

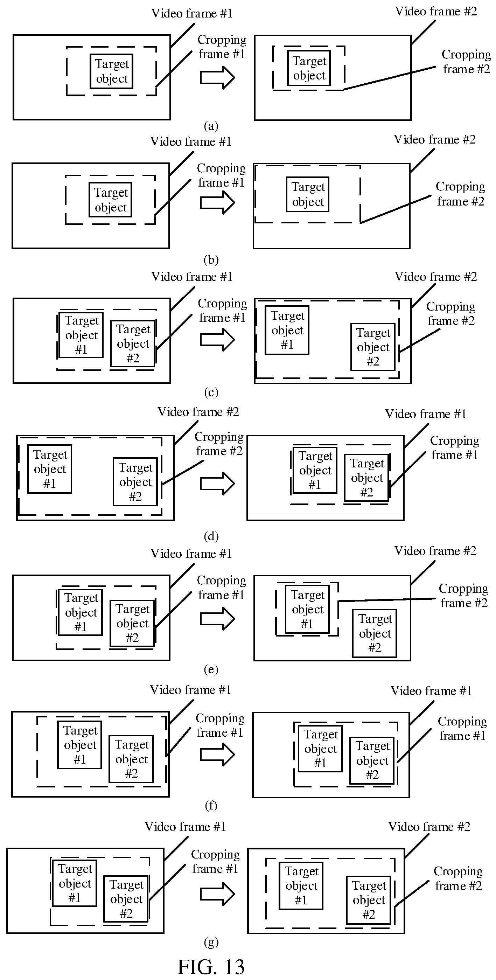

To describe a process in which the electronic device determines the cropping frame more clearly, the following describes the process with reference to FIG. 13.

As shown in (a) in FIG. 13, a video frame #1 may be the first video frame of the first video determined by the electronic device or the server, a video frame #2 is a video frame following the video frame #1, and the electronic device or the server may determine a cropping frame #1 based on a target object in the video frame #1. After determining the cropping frame #1, the electronic device may determine a location of a cropping frame #2 based on a location of the target object in the video frame #2, and may determine, based on the inter-frame speed or the video understanding algorithm, that a size of the cropping frame #2 is less than a size of the cropping frame #1. Aspect ratios of the video frame #1, the video frame #2, the cropping frame #1, and the cropping frame #2 shown in (a) in FIG. 13 are the same.

As shown in (b) in FIG. 13, a video frame #1 may be the first video frame of the first video determined by the electronic device or the server, a video frame #2 is a video frame following the video frame #1, and the electronic device or the server may determine a cropping frame #1 based on a target object in the video frame #1. After determining the cropping frame #1, the electronic device may determine a location of a cropping frame #2 based on a location of the target object in the video frame #2, and may determine, based on the inter-frame speed or the video understanding algorithm, that a size of the cropping frame #2 is greater than a size of the cropping frame #1. Aspect ratios of the video frame #1, the video frame #2, the cropping frame #1, and the cropping frame #2 shown in (b) in FIG. 13 are the same.

As shown in (c) in FIG. 13, a video frame #1 may be the first video frame of the first video determined by the electronic device or the server, a video frame #2 is a video frame following the video frame #1, and the electronic device or the server may determine a cropping frame #1 based on a target object #1 and a target object #2 in the video frame #1, and determine a cropping frame #2 based on the target object #1 and the target object #2 in the video frame #2. It can be learned from the figure that, in comparison with the video frame #1, in the video frame #2, if a distance between the target object #1 and the target object #2 increases, a size of the cropping frame #2 is greater than a size of the cropping frame #1. Aspect ratios of the video frame #1, the video frame #2, the cropping frame #1, and the cropping frame #2 shown in (c) in FIG. 13 are the same.

As shown in (d) in FIG. 13, a video frame #1 may be the first video frame of the first video determined by the electronic device or the server, a video frame #2 is a video frame following the video frame #1, and the electronic device or the server may determine a cropping frame #1 based on a target object #1 and a target object #2 in the video frame #1, and determine a cropping frame #2 based on the target object #1 and the target object #2 in the video frame #2. It can be learned from the figure that, in comparison with the video frame #1, in the video frame #2, if a distance between the target object #1 and the target object #2 decreases, a size of the cropping frame #2 is less than a size of the cropping frame #1. Aspect ratios of the video frame #1, the video frame #2, the cropping frame #1, and the cropping frame #2 shown in (d) in FIG. 13 are the same.

In some embodiments, when the electronic device or the server determines a plurality of target objects, the electronic device may determine a cropping frame of each video frame according to the video understanding algorithm.

As shown in (e) in FIG. 13, an example in which a target object #1 is a football and a target object #2 is a player is used. A video frame #1 may be the first video frame of the first video determined by the electronic device or the server, and a video frame #2 is a video frame following the video frame #1. Content of the video frame #1 is that the player kicks out the ball, and content of the video frame #2 is that the football enters the goal. In this case, when the electronic device or the server determines a cropping frame of the video frame #1, to highlight an entire shooting action, the cropping frame #1 includes the player and the football, that is, includes the target object #1 and the target object #2. When a cropping frame of the video frame #2 is determined, to highlight an image of the football entering the goal, the cropping frame #2 may include only the football, that is, include only the target object #2.

In some embodiments, when the electronic device or the server determines a plurality of target objects, the electronic device or the server may determine a priority of each target object, and determine the L cropping frames based on the priority of each target object and an inter-frame speed of each target object.

For example, as shown in (f) in FIG. 13, a video frame #1 may be the first video frame determined by the electronic device or the server, and a video frame #2 is a video frame following the video frame #1, and the electronic device or the server may determine a cropping frame #1 based on a target object #1 and a target object #2 in the video frame #1. A priority of the target object #1 is higher than a priority of the target object #2. If both an inter-frame speed of the target object #1 and an inter-frame speed of the target object #2 are less than the threshold, and the priority of the target object #1 is higher than the priority of the target object #2, to highlight the target object #1 in a new video, a size of the cropping frame, compared with a size of the cropping frame #1, may be reduced towards the target object #1 to obtain a cropping frame #2. Aspect ratios of the video frame #1, the video frame #2, the cropping frame #1, and the cropping frame #2 shown in (f) in FIG. 13 are the same.

For another example, as shown in (g) in FIG. 13, a video frame #1 may be the first video frame determined by the electronic device or the server, a video frame #2 is a video frame following the video frame #1, and the electronic device or the server may determine a cropping frame #1 based on a target object #1 and a target object #2 in the video frame #1. A priority of the target object #1 is higher than a priority of the target object #2. If either of an inter-frame speed of the target object #1 and an inter-frame speed of the target object #2 is greater than the threshold, a size of the cropping frame, compared with a size of the cropping frame #1, may be increased to obtain a cropping frame #2. Aspect ratios of the video frame #1, the video frame #2, the cropping frame #1, and the cropping frame #2 shown in (g) in FIG. 13 are the same.

It can be learned by comparing (f) and (g) in FIG. 13 that, when the inter-frame speeds of the plurality of target objects are less than the threshold, the cropping frame may be reduced towards a target object with a high priority when the electronic device or the server determines the cropping frame; or when any one of the inter-frame speeds of the plurality of electronic devices is greater than the threshold, the size of the cropping frame may be increased.

S1005: Crop the first video based on the cropping frame.

After determining the cropping frame, the electronic device or the server may crop the first video to obtain a cropped video frame. Because the aspect ratio of the cropping frame is the same as the aspect ratio of the video frame of the first video, an aspect ratio of the cropped video frame is the same as the aspect ratio of the video frame of the first video.

S1006: Generate a second video.

After obtaining the cropped video frame, the electronic device or the server may perform resampling to obtain the second video.

It should be noted that, because sizes of cropping frames determined by the electronic device or the server are different, sizes of cropped video frames obtained by the electronic device or the server may also be different, but the aspect ratios are the same. After resampling, sizes of video frames of the second video are the same.

For example, as shown in FIG. 7 or FIG. 8, the electronic device or the server obtains the video frame #4, the video frame #5, and the video frame #6 through cropping, and the electronic device or the server performs resampling on the video frames to obtain the video frame #7, the video frame #8, and the video frame #9 of a same size, but the video frame #7, the video frame #8, and the video frame #9 have different fields of view.

In this embodiment of this application, the electronic device may determine the target object in the original video, and generate the new video. The new video is centered on the target object, and the size of the cropping frame of the new video is different from a size of the original video. Therefore, a field of view changes, the target object in the original video can be better highlighted, to improve user experience.

It should be noted that the new video centered on the target object in this embodiment of this application means that overall video content of the new video is centered on the target object. However, this does not mean that each video frame of the new video is centered on the target object. In some embodiments, when the electronic device or the server generates the new video, to ensure smoothness of a video picture, inter-frame smoothing may be performed on the cropping frame. Therefore, the target object in some video frames of the new video may have a slight offset relative to a central location of the video.

The foregoing describes, with reference to FIG. 10, a method for generating, by the electronic device or the server based on the original video, the new video whose aspect ratio is the same as that of the original video. The following describes a method for generating, by the electronic device or the server, a new portrait video based on an original landscape video. An aspect ratio of the new portrait video is different from an aspect ratio of the original landscape video.

FIG. 14 is a schematic flowchart of a video processing method according to an embodiment of this application. As shown in the figure, the method includes the following steps.

S1401: Obtain a first video.

S1402: Determine a first video parameter.

In some embodiments, the first video is a landscape video. An electronic device detects that the electronic device switches from landscape mode to portrait mode, and determines the first video parameter. The first video parameter may be preset.

For example, as shown in FIG. 5, the electronic device detects that the electronic device switches from landscape mode to portrait mode, and determines the first video parameter. The first video parameter is used to generate a video #2.

In some embodiments, the electronic device detects an operation of configuring a video parameter by a user, and determines the first video parameter.

For example, as shown in (b) in FIG. 6, the user may set the video parameter in the interface 601. The video generation type configured by the user is converting the landscape video into the portrait video, so that the electronic device may determine the first video parameter in response to the operation of configuring the video parameter by the user.

S1403: Track a target object.

Optionally, in some embodiments, before S1403: tracking the target object, the method further includes: determining L video frames of the first video.

It should be understood that, for detailed descriptions of S1401 to S1403, refer to the descriptions of S1001 to S1003. For brevity, details are not described herein again.

S1404: Determine cropping frames, where vertical lengths of the cropping frames are the same.

The electronic device or a server determines a location and a size of the cropping frame. A method for determining the location and the size of the cropping frame by the electronic device or the server is similar to the foregoing description, and details are not described herein again. A difference from the method shown in FIG. 10 is that the determined cropping frames have a same vertical length but different horizontal lengths in the method. In other words, the cropping frames have different aspect ratios.

For example, as shown in (b) in FIG. 12, the horizontal length of the video frame is a, the vertical length of the video frame is b, the horizontal length of the cropping frame is c, and the vertical length of the cropping frame is b.

To describe a process in which the electronic device determines the cropping frame more clearly, the following describes the process with reference to FIG. 15.

As shown in (a) in FIG. 15, a video frame #1 may be a first video frame of the first video determined by the electronic device or the server, a video frame #2 is a video frame following the video frame #1, and the electronic device or the server may determine a cropping frame #1 based on a target object in the video frame #1. After the electronic device determines the cropping frame #1, if it is determined, based on an inter-frame speed or a video understanding algorithm, that a size of a cropping frame #2 is greater than a size of the cropping frame #1, the cropping frame #2 may be increased towards the target object when being increased. The video frame #1 and the cropping frame #1 shown in (a) in FIG. 15 have a same vertical length and different horizontal lengths, that is, an aspect ratio of the video frame #1 is different from an aspect ratio of the cropping frame #1. Similarly, an aspect ratio of the video frame #2 is different from an aspect ratio of the cropping frame #2.

As shown in (b) in FIG. 15, a video frame #1 may be a first video frame of the first video determined by the electronic device or the server, a video frame #2 is a video frame following the video frame #1, and the electronic device or the server may determine a cropping frame #1 based on a target object in the video frame #1. After the electronic device determines the cropping frame #1, if it is determined, based on an inter-frame speed or a video understanding algorithm, that a size of a cropping frame #2 is less than a size of the cropping frame #1, the cropping frame #2 may be reduced towards the target object when being reduced. As shown in (b) in FIG. 15, an aspect ratio of the video frame #1 is different from an aspect ratio of the cropping frame #1, and an aspect ratio of the video frame #1 is different from an aspect ratio of the cropping frame #2.

S1405: Crop the first video based on the cropping frame.

The electronic device or the server crops the first video based on the cropping frame to obtain cropped video frames. The cropped video frames have a same vertical length, and may have different horizontal lengths.

S1406: Generate a second video.

After obtaining the cropped video frames, the electronic device or the server may perform resampling on the cropped video frames. Horizontal lengths of video frames obtained through resampling are the same, so that the electronic device generates the second video based on the horizontal lengths of the video frames obtained through resampling. The second video is a portrait video.

For example, as shown in FIG. 9, the electronic device or the server obtains the video frame #4, the video frame #5, and the video frame #6 through cropping, and the electronic device or the server performs resampling on the video frames to obtain the video frame #7, the video frame #8, and the video frame #9 that have a same horizontal length.

In this embodiment of this application, the electronic device may convert the landscape video into the portrait video. When the portrait video is obtained through conversion, the portrait video is centered on the target object, and the size of the cropping frame of the portrait video is different from a size of the original video. Therefore, a field of view changes, the target object in the original video can be better highlighted, to improve user experience.

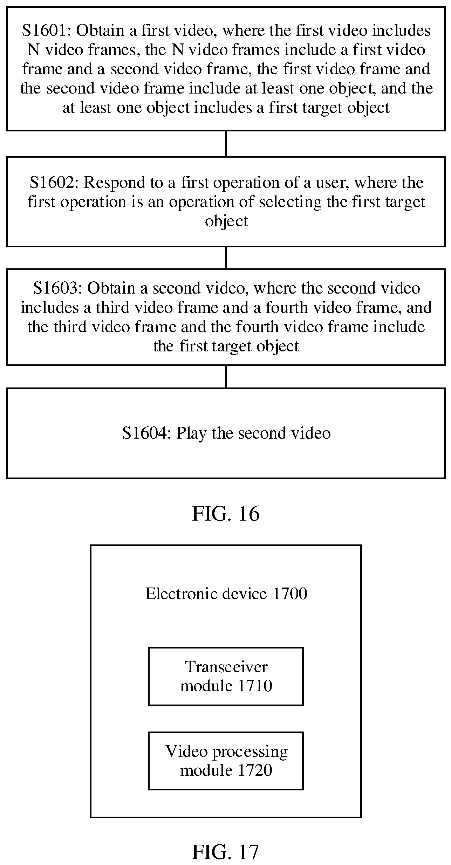

FIG. 16 is a schematic flowchart of a video processing method according to an embodiment of this application. As shown in FIG. 16, the method includes the following steps.

S1601: Obtain a first video.

In some embodiments, when playing a video, an electronic device may obtain the first video. The first video may be an online video, or may be a local video.

In some embodiments, a user may upload the first video to edit the first video, so that the electronic device may obtain the first video.

The first video includes N video frames, where N≥2 and N is an integer. The N video frames include a first video frame and a second video frame. The first video frame and the second video frame include at least one object, the at least one object includes a first target object, and the first target object may be a person, an animal, an object, an action, or the like.

When the first target object is a person, an animal, or an object, that the first video frame and the second video frame include the first target object may be understood as that the first video frame and the second video frame include the person, the animal, or the object.

When the first target object is an action, that the first video frame and the second video frame include the first target object may be understood as that content presented by the video by the first video frame and the second video frame is the action.

S1602: Respond to a first operation of the user, where the first operation is an operation of selecting the first target object.

The electronic device may obtain a second video in response to the first operation of the user, where the first operation is the operation of selecting the first target object.

For example, in the GUIs shown in FIG. 4, the electronic device marks an object in a video #1 in response to an operation of tapping the control 402 by the user, and then may obtain a video #2 and play the video #2 in response to an operation of selecting a target object by the user.

For another example, in the GUIs shown in FIG. 5, the electronic device detects that the user switches the electronic device from landscape mode to portrait mode, determines a target object in a video #1, and then obtains a video #2 and plays the video #2.

S1603: Obtain the second video, where the second video includes a third video frame and a fourth video frame, and the third video frame and the fourth video frame include the first target object.

The second video obtained by the electronic device includes the third video frame and the fourth video frame, and the third video frame and the fourth video frame include the first target object. The third video frame is obtained through cropping based on the first target object in the first video frame, the fourth video frame is obtained through cropping based on the first target object in the second video frame, and a size of the third video frame is the same as a size of the fourth video.

Optionally, in some embodiments, the at least one object further includes a second target object, and the third video frame and the fourth video frame do not include the second target object.

The first video frame and the second video frame include the first target object and the second target object. Because the user selects only the first target object, the third video frame and the fourth video frame may not include the second target object.

Optionally, in some embodiments, a size of the first target object in the first video frame is different from a size of the first target object in the third video frame.

Optionally, in some embodiments, the size of the first target object in the third video frame is different from a size of the first target object in the fourth video frame.

For example, the size of the first target object in the first video frame is the same as a size of the first target object in the second video frame, but an inter-frame speed of the first target object in the first video frame is different from an inter-frame speed of the first target object in the second video frame. In this case, a size of a cropping frame of the first video frame may be different from a size of a cropping frame of the second video frame. The third video frame and the fourth video frame are respectively generated through resampling based on a cropped first video frame and a cropped video frame, and the third video frame and the fourth video frame are video frames of a same size. Therefore, the size of the first target object in the third video frame is different from the size of the first target object in the fourth video frame.

For example, as shown in FIG. 7 or FIG. 8, a size of a person in the video frame #1, a size of a person in the video frame #2, and a size of a person in the video frame #3 are the same, and the electronic device or the server obtains the video frame #4, the video frame #5, and the video frame #6 through cropping. The electronic device or the server performs resampling on the video frames to obtain the video frame #7, the video frame #8, and the video frame #9 that have a same size, but a size of a person in the video frame #7, a size of a person in the video frame #8, and a size of a person in the video frame #9 are different.

For example, the size of the first target object in the first video frame is the same as the size of the first target object in the second video frame, the electronic device determines, according to a video understanding algorithm, that a size of a cropping frame of the first video frame is different from a size of a cropping frame of the second video frame, and the third video frame and the fourth video frame are video frames of a same size. Therefore, the size of the first target object in the third video frame is different from the size of the first target object in the fourth video frame.

Optionally, in some embodiments, the size of the first target object in the third video frame is the same as the size of the first target object in the fourth video frame.

For example, the size of the first target object in the first video frame is different from the size of the first target object in the second video frame, and an inter-frame speed of the first target object in the first video frame is different from an inter-frame speed of the first target object in the second video frame. In this case, a size of a cropping frame of the first video frame is different from a size of a cropping frame of the second video frame, and the third video frame and the fourth video frame are video frames of a same size. Therefore, the size of the first target object in the third video frame may be the same as the size of the first target object in the fourth video frame.

For example, the size of the first target object in the first video frame is different from the size of the first target object in the second video frame. The electronic device determines, according to a video understanding algorithm, that a size of a cropping frame of the first video frame is different from a size of a cropping frame of the second video frame, and the third video frame and the fourth video frame are video frames of a same size. Therefore, the size of the first target object in the third video frame may be the same as the size of the first target object in the fourth video frame.

Optionally, in some embodiments, a quantity of video frames of the second video is the same as a quantity of video frames of the first video.

Optionally, in some embodiments, the quantity of video frames of the second video is determined based on the quantity of video frames of the first video and a frame extraction interval, that is, the quantity of video frames of the second video is less than the quantity of video frames of the second video.

Optionally, in some embodiments, the N video frames include the first target object, the second video includes M video frames, and the M video frames include the first target object, where M≤N, and M is an integer.

In a possible implementation, the frame extraction interval in this embodiment of this application may be set by the user.

In a possible implementation, the frame extraction interval in this embodiment of this application may be defined by a system.

In a possible implementation, the frame extraction interval in this embodiment of this application may be determined based on an inter-frame speed of the first target object between two adjacent video frames in the N video frames.

Optionally, in some embodiments, duration of the first video is different from duration of the second video.

For example, the duration of the first video is 10 minutes, and the duration of the second video is 2 minutes.

Optionally, in some embodiments, the first video is a landscape video, the second video is a portrait video, the first video frame and the second video frame are landscape video frames, the third video frame and the fourth video frame are portrait video frames, and the third video frame and the fourth video frame have different heights (or vertical lengths).

For example, as shown in FIG. 9, the video frame #7, the video frame #8, and the video frame #9 are portrait video frames, and vertical lengths of the video frame #7, the video frame #8, and the video frame #9 are different.

S1604: Play the second video.

After obtaining the second video, the electronic device may play the second video.

In this embodiment of this application, the electronic device may determine the first target object in the original video based on the operation of the user, and play the new video. The new video is centered on the first target object, so that the first target object in the original video can be better highlighted, to improve user experience.

Optionally, in some embodiments, the method further includes:
playing the first video.

Playing the second video in S1604 includes:
playing the second video in full screen when the first target object is detected.

After the second video is played in full screen and the first target object is not detected, the method further includes:
continuing to play the first video.

The GUIs shown in FIG. 4 are used as an example. After obtaining a first video, the electronic device may play the first video in the interface 401. After the user taps the control 402, the electronic device may identify an object of the first video and determine a target object in response to selection of the user, and may play a video #2 in the interface 401. After the video #2 is played in the interface 401 and the target object is not detected, the video #1 continues to be played.

Optionally, in some embodiments, the method further includes:
displaying a first interface, where the first interface displays a first window and a second window, the first window displays the first video frame, and the second window displays the third video frame.

For example, as shown in (b) in FIG. 6, the electronic device displays a window 601 and a window 602. The window 601 may display a first video frame, and the window 603 may display a third video frame.

Optionally, in some embodiments, the method further includes:
displaying a first interface, where the first interface includes a first window, and the first video is played in the first window.

Playing the second video in S1604 includes:
displaying a second interface when the first target object is detected, where the second interface includes the first window and a second window, the first video is played in the first window, and the second video is played in the second window.

After the second interface is displayed, the method further includes:
displaying a third interface when the first target object is not detected, where the third interface includes the first window, the first video continues to be played in the first window, and the third interface does not include a second window.

It may be understood that the first window is a window for playing the video #1, the second window is a window for playing the video #2, and the first window may be a full-screen window. In this case, an area of the first window is the same as an area of the interface. The second window may be a small window or a floating window, and may be displayed on the first window.

For example, as shown in (a) and (d) in FIG. 3, the electronic device first displays the window 301 in the interface to play the video #1. When the target object is detected, the electronic device displays the window 301 and the window 305 in the interface, where the window 301 plays the video #1, and the window 305 plays the video #2. After playing the video #2 in the window 305, if the target object is not detected, the electronic device may display only the window 301 in the interface to play the video #1.

Optionally, in some embodiments, before S1602: responding to the first operation of the user, the method further includes:
displaying a third interface, where the third interface includes a fifth window, and the fifth window includes at least one object in the first video.

For example, the GUIs shown in FIG. 4 are used as an example. After obtaining the first video, the electronic device may play the first video in the interface (or the window) 401. After the user taps the control 402, the electronic device may identify an object of the first video and display the identified object in the interface (or the window) 403.

Optionally, in some embodiments, the first operation is an operation of selecting the first target object in the fifth window.

For example, the GUIs shown in FIG. 4 are used as an example. After obtaining the first video, the electronic device may play the first video in the interface (or the window) 401. After the user taps the control 402, the electronic device may identify an object of the first video and display the identified object in the interface (or the window) 403. The user may select the target object in the interface (or the window) 403.

Optionally, in some embodiments, the at least one object further includes a second target object, and the method further includes:
obtaining a third video in response to a second operation of the user, where the third video includes a fifth video frame and a sixth video frame, the fifth video frame includes the first target object and/or the second target object, the sixth video frame includes the first target object and/or the second target object, the fifth video frame is obtained through cropping based on the first target object and/or the second target object in the first video frame, and the sixth video frame is obtained through cropping based on the first target object and/or the second target object in the second video frame.

The second operation is an operation used to generate a video in which the target object is highlighted. For example, as shown in FIG. 3, the user performs an operation of tapping the control 304.

When the first video frame and the second video frame include the first target object and the second target object, the electronic device may determine a cropped video frame based on the video understanding algorithm or inter-frame speeds of the first target object and the second target object and priorities of the first target object and the second target object. The cropped video frame may include both the first target object and the second target object, or may include only either of the first target object and the second target object.

For example, as shown in (e) in FIG. 13, the video frame obtained through cropping the video frame #1 includes the target object #1 and the target object #2, and the video frame obtained through cropping the video frame #2 includes the target object #1 but does not include the target object #2.

For another example, as shown in (f) and (g) in FIG. 13, both video frames obtained through cropping the video frame #1 and the video frame #2 include the target object #1 and the target object #2.

The foregoing mainly describes the video processing method provided in embodiments of this application from perspectives of the electronic device and the server. It may be understood that, to implement the foregoing functions, the electronic device and the server include corresponding hardware structures and/or software modules for performing the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional module division may be performed on the processor in the electronic device and the server based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

When each functional module is obtained through division based on each function, FIG. 17 is a diagram of composition of an electronic device according to an embodiment of this application. As shown in FIG. 17, an electronic device 1700 includes an obtaining module 1710 and a video processing module 1720.

The transceiver module 1710 is configured to obtain a first video.

The video processing module 1720 is configured to obtain a second video in response to an operation of a user.

The video processing module 1720 is further configured to play a second video.

The video processing module 1720 is further configured to obtain a third video in response to a second operation of the user.

Optionally, in some embodiments, the second video includes a third video frame and a fourth video frame, and a size of a first target object in the third video frame is different from a size of the first target object in the fourth video frame.

Optionally, in some embodiments, the first video includes a first video frame and a second video frame, a size of a first target object in the first video frame is the same as a size of the first target object in the second video frame, and an inter-frame speed of the first target object in the first video frame is different from an inter-frame speed of the first target object in the second video frame.

Optionally, in some embodiments, the second video includes a third video frame and a fourth video frame, and a size of a first target object in the third video frame is the same as a size of the first target object in the fourth video frame.

Optionally, in some embodiments, the first video includes a first video frame and a second video frame, a size of a first target object in the first video frame is different from a size of the first target object in the second video frame, and an inter-frame speed of the first target object in the first video frame is different from an inter-frame speed of the first target object in the second video frame.

The video processing module 1720 is further configured to display a first interface. The first interface displays a first window and a second window, the first window displays the first video frame, and the second window displays the third video frame.

The video processing module 1720 is further configured to:
play the first video.

The video processing module 1720 is specifically configured to play the second video in full screen when the first target object is detected.

The video processing module 1720 is further configured to continue to play the first video after the second video is played in full screen and when the first target object is not detected.

Optionally, in some embodiments, a quantity of video frames of the second video is determined based on a quantity of video frames of the first video frame and a frame extraction interval.

The video processing module 1720 is further configured to determine the frame extraction interval based on the inter-frame speed of the first target object.

Optionally, in some embodiments, duration of the first video is different from duration of the second video.

Optionally, in some embodiments, the second video includes a third video frame and a fourth video frame, the third video frame and the fourth video frame are portrait video frames, and a vertical length of the third video frame is different from a vertical length of the fourth video frame.

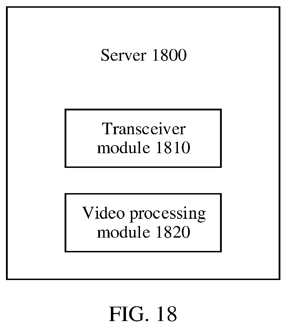

When each functional module is obtained through division based on each function, FIG. 18 is a diagram of composition of a server according to an embodiment of this application. As shown in FIG. 18, an electronic device 1800 includes a transceiver module 1810 and a video processing module 1820.

The transceiver module 1810 is configured to obtain a first video.

The video processing module 1820 is configured to generate a second video in response to a first operation of a user.

The transceiver module 1810 is further configured to send the second video to the electronic device.

In some embodiments, the video processing module 1820 is specifically configured to: determine a cropping frame of the first video in response to the first operation of the user; and
generate the second video based on the first video and a cropping frame group of the first video.

Optionally, in some embodiments, the video processing module 1820 is further configured to generate a third video in response to a second operation of the user.

Optionally, in some embodiments, the second video includes a third video frame and a fourth video frame, and a size of a first target object in the third video frame is different from a size of the first target object in the fourth video frame.

Optionally, in some embodiments, the first video includes a first video frame and a second video frame, a size of a first target object in the first video frame is the same as a size of the first target object in the second video frame, and an inter-frame speed of the first target object in the first video frame is different from an inter-frame speed of the first target object in the second video frame.

Optionally, in some embodiments, the second video includes a third video frame and a fourth video frame, and a size of a first target object in the third video frame is the same as a size of the first target object in the fourth video frame.

Optionally, in some embodiments, the first video includes a first video frame and a second video frame, a size of a first target object in the first video frame is different from a size of the first target object in the second video frame, and an inter-frame speed of the first target object in the first video frame is different from an inter-frame speed of the first target object in the second video frame.

It should be noted that all related content of the steps in the foregoing method embodiments may be cited in function description of corresponding functional modules. Details are not described herein again. The electronic device provided in this embodiment of this application is configured to perform the foregoing video processing method, and therefore can achieve same effect as the foregoing.

An embodiment of this application further provides an electronic device, including a processor, a memory, an application, and a computer program. The foregoing components may be connected through one or more communication buses. The one or more computer programs are stored in the memory and are configured to be executed by the one or more processors. The one or more computer programs include instructions, and the instructions may be used to enable the electronic device to perform the steps of the electronic device in the foregoing embodiments.

For example, the processor may be specifically the processor 110 shown in FIG. 1, and the memory may be specifically the internal memory 120 shown in FIG. 1 and/or the external memory connected to the electronic device.

An embodiment of this application further provides a chip. The chip includes a processor and a communication interface. The communication interface is configured to receive a signal and transmit the signal to the processor. The processor processes the signal, so that the video processing method in any one of the foregoing possible implementations is performed.

This embodiment further provides a computer-readable storage medium. The computer-readable storage medium stores computer instructions. When the computer instructions are run on an electronic device, the electronic device is enabled to perform the foregoing related method steps to implement the video processing method in the foregoing embodiments.

An embodiment further provides a computer program product. When the computer program product runs on a computer, the computer is enabled to perform the foregoing related steps to implement the video processing method in the foregoing embodiments.

According to the context, the term "when" or "after" used in the foregoing embodiments may be interpreted as a meaning of "if" or "after" or "in response to determining" or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A video processing method, wherein the method comprises:

   obtaining a first video, wherein the first video comprises N video frames, N≥2 and N is an integer, the N video frames comprise a first video frame and a second video frame, the first video frame and the second video frame comprise at least one object, and the at least one object comprises a first target object;
   responding to a first operation of a user, wherein the first operation is an operation of selecting the first target object;
   obtaining a second video, wherein the second video comprises a third video frame and a fourth video frame, the third video frame and the fourth video frame comprise the first target object, the third video frame is obtained through cropping based on the first target object in the first video frame, and the fourth video frame is obtained through cropping based on the first target object in the second video frame; and
   playing the second video.

2. The method according to claim 1, wherein the at least one object further comprises a second target object, and the method further comprises:

   responding to a second operation of the user, wherein the second operation is used to select the first target object and the second target object; and
   obtaining a third video, wherein the third video comprises a fifth video frame and a sixth video frame, the fifth video frame comprises the first target object and/or the second target object, the sixth video frame comprises the first target object and/or the second target object, the fifth video frame is obtained through cropping based on the first target object and/or the second target object in the first video frame, and the sixth video frame is obtained through cropping based on the first target object and/or the second target object in the second video frame.

3. The method according to claim 1, wherein the at least one object further comprises a second target object, and the third video frame and the fourth video frame do not comprise the second target object.

4. The method according to any one of claims 1 to 3, wherein a size of the first target object in the third video frame is different from a size of the first target object in the first video frame.

5. The method according to any one of claims 1 to 4, wherein the size of the first target object in the third video frame is different from a size of the first target object in the fourth video frame.

6. The method according to claim 5, wherein the size of the first target object in the first video frame is the same as a size of the first target object in the second video frame, and an inter-frame speed of the first target object in the first video frame is different from an inter-frame speed of the first target object in the second video frame.

7. The method according to any one of claims 1 to 6, wherein the method further comprises:
   displaying a first interface, wherein the first interface displays a first window and a second window, the first window displays the first video frame, and the second window displays the third video frame.

8. The method according to any one of claims 1 to 6, wherein before the playing the second video, the method further comprises:

   playing the first video in full screen;
   the playing the second video comprises:

playing the second video in full screen when the first target object is detected; and
after the playing the second video in full screen, the method further comprises:
continuing to play the first video in full screen when the first target object is not detected.

9. The method according to any one of claims 1 to 6, wherein the method further comprises:

displaying a first interface, wherein the first interface comprises a first window, and the first video is played in the first window;
the playing the second video comprises:

displaying a second interface when the first target object is detected, wherein the second interface comprises the first window and a second window, the first video is played in the first window, and the second video is played in the second window; and
after the displaying a second interface, the method further comprises:
displaying a third interface when the first target object is not detected, wherein the third interface comprises the first window, the first video continues to be played in the first window, and the third interface does not comprise the second window.

10. The method according to any one of claims 1 to 9, wherein before the responding to a first operation of a user, the method further comprises:
displaying the third interface, wherein the third interface comprises a fifth window, and the fifth window comprises the at least one object in the first video.

11. The method according to claim 10, wherein the first operation is an operation of selecting the first target object in the fifth window.

12. The method according to any one of claims 1 to 11, wherein the N video frames comprise the first target object, the second video comprises M video frames, the M video frames comprise the first target object, M≤N, and M is an integer.

13. The method according to claim 12, wherein the method further comprises:
determining a frame extraction interval based on an inter-frame speed of the first target object between two adjacent video frames in the N video frames.

14. The method according to any one of claims 1 to 11, wherein the first video is a landscape video, the second video is a portrait video, the first video frame and the second video frame are landscape video frames, and the third video frame and the fourth video frame are portrait video frames.

15. The method according to claim 14, wherein a height of the third video frame is different from a height of the fourth video frame.

16. An electronic device, comprising one or more processors and one or more memories, wherein the one or more memories store one or more computer programs, the one or more computer programs comprise instructions, and when the instructions are executed by the one or more processors, the method according to any one of claims 1 to 15 is performed.

17. A chip, wherein the chip comprises a processor and a communication interface, the communication interface is configured to receive a signal and transmit the signal to the processor, and the processor processes the signal, so that the method according to any one of claims 1 to 15 is performed.

18. A computer-readable storage medium, wherein the computer-readable storage medium stores computer instructions, and when the computer instructions are run on a computer, the method according to any one of claims 1 to 15 is performed.

19. A computer program product comprising instructions, wherein when the computer program product runs on a computer,
the computer is enabled to perform the method according to any one of claims 1 to 15.

Electronic device 100

FIG. 1

| Application layer | Camera | Calendar | Maps | WLAN | Music | Messages |
|---|---|---|---|---|---|---|
| | Gallery | Phone | Navigation | Bluetooth | Video | ... |

| Application framework layer | Window manager | Content provider | Phone manager | Resource manager |
|---|---|---|---|---|
| | Notification manager | View system | ... | |

| System library | Surface manager | Three-dimensional graphics processing library |
|---|---|---|
| | Two-dimensional graphics engine | Media library | Image processing library | ... |

| Kernel layer | Display driver | Camera driver |
|---|---|---|
| | Audio driver | Sensor driver | ... |

FIG. 2

FIG. 3

FIG. 4

(a)

(b)

FIG. 5

Video #1

▮▮▷

Video generation type:
Target object:
Upper limit of a cropping frame size:
Lower limit of a cropping frame size:
Inter-frame speed threshold:
Frame extraction interval:
Video size:

601

Video #2

▮▮▷

Video generation type: Highlight a target object
Target object: Football
Upper limit of a cropping frame size: $l_1$, $w_1$
Lower limit of a cropping frame size: $l_2$, $w_2$
Inter-frame speed threshold: $v_1$
Frame extraction interval: $t_1$
Video size: $l_3$, $w_3$

601

(a)

Video #1

▮▮▷

Video generation type:
Target object:
Upper limit of a cropping frame size:
Lower limit of a cropping frame size:
Inter-frame speed threshold:
Frame extraction interval:
Video size:

601

Video #1

▮▮▷

Video #2

Video generation type: Convert a landscape
video into a portrait video
Target object: Football
Upper limit of a cropping frame size: $w_1$
Lower limit of a cropping frame size: $w_2$
Inter-frame speed threshold: $v_1$
Frame extraction interval: $t_1$
Video size: $l_4$, $w_4$

601

602

(b)

FIG. 6

FIG. 7

Video frame #1 → Video frame #2 → Video frame #3 — Video frames of a video #1

Video frame #4 → Video frame #5 → Video frame #6 — Video frames obtained by cropping the video #1

Video frame #7 → Video frame #8 → Video frame #9 — Video frames of a video #2

FIG. 8

Video frame #1     Video frame #2     Video frame #3

Video frames of a video #1

Video frame #4     Video frame #5     Video frame #6

Video frames obtained by cropping the video #1

Video frame #7     Video frame #8     Video frame #9

Video frames of a video #2

FIG. 9

S1001: Obtain a first video

S1002: Determine a first video parameter

S1003: Track a target object

S1004: Determine a cropping frame, where an aspect ratio of the cropping frame is the same as an aspect ratio of a video frame of the first video

S1005: Crop the first video based on the cropping frame

S1006: Generate a second video

FIG. 10

Center coordinates $(x_1, y_1)$ of a video frame #1

Center coordinates $(x_2, y_2)$ of a video frame #2

FIG. 11

a

c

d

b

(a)

a

b

c

b

(b)

FIG. 12

FIG. 13

S1401: Obtain a first video

S1402: Determine a first video parameter

S1403: Track a target object

S1404: Determine a cropping frame, where a vertical length of the cropping frame is the same as a vertical length of a video frame of the first video

S1405: Crop the first video based on the cropping frame

S1406: Generate a second video

FIG. 14

Video frame #1

Cropping frame #1

Target object

Video frame #2

Cropping frame #2

Target object

(a)

Video frame #1

Cropping frame #1

Target object

Video frame #2

Cropping frame #2

Target object

(b)

FIG. 15

S1601: Obtain a first video, where the first video includes N video frames, the N video frames include a first video frame and a second video frame, the first video frame and the second video frame include at least one object, and the at least one object includes a first target object

S1602: Respond to a first operation of a user, where the first operation is an operation of selecting the first target object

S1603: Obtain a second video, where the second video includes a third video frame and a fourth video frame, and the third video frame and the fourth video frame include the first target object

S1604: Play the second video

FIG. 16

Electronic device 1700

Transceiver module 1710

Video processing module 1720

FIG. 17

Server 1800

Transceiver
module 1810

Video processing
module 1820

FIG. 18

## INTERNATIONAL SEARCH REPORT

| International application No. |
|---|
| **PCT/CN2023/134290** |

### A. CLASSIFICATION OF SUBJECT MATTER

H04N 21/44(2011.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, CNKI, VEN, ENTXT, JPTXT: 横屏, 竖屏, 剪裁, 切换, 目标对象, 拼接, 帧间速度, 帧率, 抽帧, 尺寸, 画幅, 全屏, landscape, portrait, crop, toggle, target object, stitching, inter-frame speed, frame rate, frame draw, size, picture, full screen

### C. DOCUMENTS CONSIDERED TO BE RELEVANT

| Category* | Citation of document, with indication, where appropriate, of the relevant passages | Relevant to claim No. |
|---|---|---|
| X | CN 112135188 A (MIGU CULTURE TECHNOLOGY CO., LTD. et al.) 25 December 2020 (2020-12-25)<br>description, paragraphs 55-199, and figures 1-6 | 1-19 |
| A | CN 115174994 A (TENCENT TECHNOLOGY (SHENZHEN) CO., LTD.) 11 October 2022 (2022-10-11)<br>entire document | 1-19 |
| A | CN 113438436 A (ALIBABA GROUP HOLDING LIMITED) 24 September 2021 (2021-09-24)<br>entire document | 1-19 |
| A | CN 114816210 A (HUAWEI TECHNOLOGIES CO., LTD.) 29 July 2022 (2022-07-29)<br>entire document | 1-19 |
| A | CN 114724055 A (HUAWEI TECHNOLOGIES CO., LTD.) 08 July 2022 (2022-07-08)<br>entire document | 1-19 |
| A | WO 2019127868 A1 (GUANGZHOU UC NETWORK TECHNOLOGY CO., LTD.) 04 July 2019 (2019-07-04)<br>entire document | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 March 2024** | **08 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/134290** |

| Patent document cited in search report | | | Publication date (day/month/year) | Patent family member(s) | Publication date (day/month/year) |
| --- | --- | --- | --- | --- | --- |
| CN | 112135188 | A | 25 December 2020 | None | |
| CN | 115174994 | A | 11 October 2022 | None | |
| CN | 113438436 | A | 24 September 2021 | None | |
| CN | 114816210 | A | 29 July 2022 | None | |
| CN | 114724055 | A | 08 July 2022 | None | |
| WO | 2019127868 | A1 | 04 July 2019 | None | |

Form PCT/ISA/210 (patent family annex) (July 2022)

**EP 4 618 561 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211519957